# EUROPÄISCHE PATENTSCHRIFT

(11) **EP 4 045 711 B1**
(45) Veröffentlichungstag und Bekanntmachung des Hinweises auf die Patenterteilung: **25.02.2026**
(21) Anmeldenummer: 20799970.7
(22) Anmeldetag: 01.10.2020
(51) Int. Cl.: D21J 3/00

(54) **FASERFORMANLAGE ZUR HERSTELLUNG VON FORMTEILEN AUS UMWELTVERTRÄGLICH ABBAUBAREM FASERMATERIAL**
FIBRE MOULDING PLANT FOR PRODUCING MOULDED PARTS FROM ENVIRONMENTALLY DEGRADABLE FIBRE MATERIAL
INSTALLATION DE MOULAGE DE FIBRES POUR FABRIQUER DES PIÈCES MOULÉES À PARTIE DE MATIÈRE FIBREUSE DÉGRADABLE DE MANIÈRE ÉCOCOMPATIBLE

(30) Priorität: 14.10.2019 DE 102019127559
(43) Veröffentlichungstag der Anmeldung: 24.08.2022
(73) Patentinhaber: KIEFEL GmbH, 83395 Freilassing (DE)
(72) Erfinder: HAGENAUER, Richard, 83416 Saaldorf-Surheim (DE); WIESER, Gerhard, 83451 Piding (DE); HAUSMANN, Matthias, 5091 Unken (AT)
(74) Vertreter: DTS Patent- und Rechtsanwälte PartmbB
(86) Internationale Anmeldenummer: PCT/DE2020/000229
(87) Internationale Veröffentlichungsnummer: WO 2021/073673

(56) Entgegenhaltungen:
- EP-A1- 1 197 596
- WO-A1-2014/019027
- WO-A1-2018/049460
- WO-A1-93/17183
- CN-A- 108 262 759
- CN-A- 108 457 134
- US-A1- 2003 051 845

## Beschreibung

### Gebiet der Erfindung

Die Erfindung betrifft eine Faserformanlage umfassend eine Anformstation, eine erfindungsgemäße Vorformstation und eine Heißpressstation zur Herstellung eines Formteils aus umweltverträglich abbaubarem Fasermaterial mittels eines in der Faserformanlage ausgeführten Faserformprozess, wobei die Faserformanlage einen automatischen Werkzeugwechsel aus Anformstation, Vorformstation und/oder Heißpressstation ermöglicht. Die Erfindung betrifft des Weiteren eine solche Anformstation, Vorformstation und Heißpressstation sowie ein entsprechendes Verfahren zum automatischen Wechsel von Werkzeugen in der Faserformanlage.

### Hintergrund der Erfindung

Es ist wünschenswert, Bürger und Umwelt vor Kunststoffverschmutzung zu schützen. Insbesondere verursachen Einwegplastik-Produkte wie Verpackungsmaterialien oder Plastikbesteck und Plastikgeschirr eine große Abfallmenge. Insofern besteht für Verpackungsmaterialien und Behältnisse aus Kunststoff ein steigender Bedarf an Ersatzmaterialien, mit denen diese Produkte aus recycelbaren Kunststoffen, Materialien mit weniger Kunststoffanteil oder gar aus kunststofffreien Materialien herzustellen.

Die Vorstellung, Naturfasern anstelle von klassischen Kunststoffen im Extrusionsverfahren zu verwenden, existiert mindestens schon seit Anfang der 1990er Jahre, siehe beispielsweise EP 0 447 792 B1. Rohstoffgrundlage ist hier, wie in den meisten faserverarbeitenden Verfahren, die Pulpe. Prinzipiell besteht die Pulpe aus Wasser, Naturfasern und einem Bindemittel wie zum Beispiel industrielle Stärke (Kartoffelstärke) und weist eine breiige Konsistenz auf.

Aus der Druckschrift US 203/051845 A1 ist ein Verfahren bekannt, in dem über einen Saugschritt Fasermaterial an einer Tragstruktur angelagert wird und mittels Pressverfahren Formteile ausgebildet werden. Aus der CN 108 262 759 A und der CN 108 457 134 A sind vergleichbare Verfahren bekannt, bei denen mittels eines Heißpressschrittes Formteile produziert werden. Ein verbessertes Verfahren ist aus der EP 1 197 596 A1 bekannt, bei dem nach einem Anformschritt eine Entwässerung und eine Vorformung unter Druck erfolgt. Nach einem Transfer des vorgeformten Formteils erfolgt ein abschließender Heißpressschritt. Ferner ist hieraus eine Faserformanlage gemäß dem Oberbegriff des vorliegenden Anspruchs 1 bekannt.

Ein alternatives Verfahren ist aus der WO 2014/049460 A1 bekannt geworden, die vorschlägt, in einem Anlagerungsschritt ein Fasermaterial auf einen Träger durch einen Schöpfschritt anzulagern, wobei nachfolgend diese Materialmatte unter Druck soweit ausgeformt wird, dass diese dekoriert, bedruckt und final in einem Heißpressschritt endgeformt werden kann. Weitere Verfahren dieser Art sind aus der WO 93/17183 A1 oder der WO 2018/049460 A1 bekannt.

Da Verbraucher an verschiedensten naturverträglichen Produkte mit unterschiedlichen Größen, Formen und Anforderungen interessiert sind und diese nicht unbedingt in sehr großen Stückzahlen nachfragen, wäre es wünschenswert, ein effektives und flexibles Herstellungsverfahren für umweltverträgliche Formteile aus Naturfasern und eine entsprechende Maschine zur Verfügung zu haben, um diese Produkte (Formteile) variabel und mit guter Qualität reproduzierbar herstellen zu können.

### Zusammenfassung der Erfindung

Der Erfindung liegt die Aufgabe zugrunde, ein effektives und flexibles Herstellungsverfahren für umweltverträgliche Formteile aus Naturfasern und eine entsprechende Maschine bereitzustellen, mit dem unterschiedliche Produkte (Formteile) variable und mit guter Qualität reproduzierbar herzustellen sind.

Die Aufgabe wird gemäß der Erfindung durch die Merkmale des Anspruchs 1 gelöst.

Der Begriff "umweltverträglich abbaubarem Fasermaterial" bezeichnet Fasermaterialien, die sich unter Umwelteinflüssen wie Feuchtigkeit, Temperatur und/oder Licht zersetzen lassen, wobei der Zersetzungsprozess kurzfristig erfolgt, also beispielsweise im Bereich von Tagen, Wochen oder wenigen Monaten. Das "umweltverträglich abbaubare Fasermaterial" wird im Folgenden der Einfachheit halber auch zum Teil nur als "Fasermaterial" bezeichnet. Hierbei sollen vorzugsweise weder vom Fasermaterial noch von den Zersetzungsprodukten eine Umweltgefährdung oder Kontamination ausgehen. Fasermaterialien, die im Sinne der vorliegenden Erfindung ein umweltverträglich abbaubarem Fasermaterial darstellen, sind beispielsweise Naturfasern gewonnen aus Zellstoff, Papier, Pappe, Holz, Gras, Pflanzenfasern, Zuckerrohresten, Hanf etc. oder aus deren Bestandteilen oder Teilen davon und/oder entsprechend wiederverwertetes Material. Ein umweltverträglich abbaubarem Fasermaterial kann aber auch künstlich hergestellte Fasern wie beispielsweise PLA (Polylactide) etc. bezeichnet, die den voranstehenden Fasermaterialien entsprechen oder deren Eigenschaften besitzen. Vorzugsweise ist das umweltverträglich abbaubare Fasermaterial kompostierbar. Vorzugsweise ist das umweltverträglich abbaubare Fasermaterial und die daraus hergestellten Behältnisse für die Einbringung in den Wertstoffkreislauf der deutschen Biotonne und als Ressource für Biogasanlagen geeignet. Vorzugsweise sind die Fasermaterialien und die daraus hergestellten Behältnisse biologisch abbaubar gemäß EU-Norm EN 13432.

Der Begriff "Pulpe" bezeichnet fluide Massen, die Fasern enthalten, hier das umweltverträglich abbaubarem Fasermaterial. Der Begriff "flüssig" bezeichnet hier den Aggregatzustand der Pulpe, wobei die flüssige Pulpe das umweltverträglich abbaubare Fasermaterial in Form von Fasern umfasst (flüssige Lösung mit dem umweltverträglich abbaubarem Fasermaterial). Hierbei können die Fasern als einzelne Fasern, als Fasergebilde oder Fasergruppe aus mehreren zusammenhängenden Fasern vorliegen. Die Fasern stellen das Fasermaterial unabhängig davon dar, ob sie sich als einzelne Fasern, als Fasergebilde oder Fasergruppe in der Pulpe befinden. Hierbei sind die Faser in der flüssigen Lösung so gelöst, dass sie mit möglichst gleicher Konzentration ortsunabhängig in der flüssigen Lösung schweben, beispielsweise als Gemisch oder Suspension aus flüssiger Lösung und Fasermaterial. Dazu kann beispielsweise die Pulpe in manchen Ausführungsformen entsprechend temperiert und/oder umgewälzt werden. Die Pulpe besitzt vorzugsweise eine niedrige Stoffdichte, d.h. einen Anteil von Fasermaterial kleiner 8%. In einer Ausführungsform wird im erfindungsgemäßen Verfahren eine Pulpe mit einem Anteil an umweltverträglichem abbaubarem Fasermaterial kleiner 5%, vorzugsweise kleiner 2%, besonders bevorzugt zwischen 0,5% und 1,0 %, verwendet. Dieser geringe Anteil an Fasermaterial kann unter anderem eine Verklumpung des Fasermaterials in der flüssigen Lösung vermeiden, sodass das Fasermaterial noch mit guter Qualität am Saugwerkzeug anformbar ist. Verklumptes Fasermaterial kann zwar durch das Saugwerkzeug angesaugt werden, würde aber vermutlich ein Formteil mit fluktuierender Schichtdicke zur Folge haben, was in der Produktion der Formteile nach Möglichkeit zu vermeiden ist. Insofern sollte der Anteil des Fasermaterials in der Pulpe klein genug sein, damit ein Verklumpen oder ein Aneinanderketten nicht oder nur in einem vernachlässigbaren Maße erfolgt. Die flüssige Lösung kann dabei jede für den Faserformprozess geeignete Lösung sein. Beispielsweise kann die Pulpe eine wässerige Lösung mit dem umweltverträglichem abbaubarem Fasermaterial sein. Eine wässrige Lösung stellt unter anderem eine einfach handhabbare Lösung dar. Hierbei kann die Pulpe keinen organischen Binder, vorzugsweise ebenfalls keinen nicht-organischen Binder enthalten. Ohne Binder sind die hergestellten Formteile aus ursprünglich umweltverträglich abbaubarem Fasermaterial besonders umweltverträglich abbaubar, da kein umweltkritischer Binder, vorzugsweise überhaupt kein Binder, verwendet wird. Der Verzicht auf Binder wird durch die Kombination der Anform-, Vorform- und Heißpressschritte ermöglicht, die in ihrer Gesamtheit eine gute mechanische Verkettung der einzelnen Fasern miteinander im Fasermaterial des Formteils gewährleisten. Die mechanische Verkettung ist dabei so stark, dass zur Formstabilität des Formteils auf Binder verzichtet werden kann. In einer Ausführungsform besteht das umweltverträglich abbaubare Fasermaterial im Wesentlichen aus Fasern mit einer Faserlänge kleiner als 5mm. Bei Fasern dieser Länge erhält man unter anderem eine gute homogene Lösung des Fasermaterials in der flüssigen Lösung, sodass der Verklumpungsgrad der Fasern in der Pulpe hinreichend gering ist für einen guten reproduzierbaren Faserformprozess für das Formteil. In einer Ausführungsform wird die Pulpe mit einer Temperatur kleiner oder gleich 80°C, bevorzugt kleiner oder gleich 50°C, besonders bevorzugt mit Raumtemperatur, bereitgestellt. Diese geringen Temperaturen ermöglichen unter anderem eine einfache Prozessführung, insbesondere bei Raumtemperatur. Bei erhöhten Temperaturen kann man den Heißpressvorgang ein wenig beschleunigen.

Der Faserformprozess bezeichnet die Prozessschritte, die an der Formung des Formteils beteiligt sind beginnend mit der Bereitstellung der Pulpe, des Anformens des Formteils in der Anformstation aus dem Fasermaterial aus der Pulpe, des Vorformens des Formteils in der Vorformstation, des Heißpressen des Formteils in der Heißpressstation und gegebenenfalls des Beschichtens des Formteils mit funktionalen Schichten, wobei das Beschichten an jeder dafür für die jeweilige aufzubringende Schicht geeigneten Stelle im Faserformprozess angeordnet sein kann.

Die Formteile können dabei eine beliebige Form, hier auch als Kontur bezeichnet, aufweisen, sofern diese Form (oder Kontur) im erfindungsgemäßen Verfahren herstellbar ist bzw. sich das Verfahren für die Herstellung dieser Form (oder Kontur) eignet. Hierbei können die für den Faserformprozess verwendeten Komponenten auf die jeweilige Form (oder Kontur) des Formteils angepasst sein. Bei unterschiedlichen Formteilen mit unterschiedlichen Formen (oder Konturen) können unterschiedliche entsprechend angepasste Komponenten wie beispielsweise das Saugwerkzeug, der Saugkopf, die Vorpresseinheit, die Heißpressstation etc. verwendet werden. Vorzugsweise ist die Soll-Kontur des Formteils und damit die entsprechenden formenden Komponenten so gestaltet, dass alle Flächen des Formteils einen Winkel α von mindestens 3 Grad zur Pressrichtung beim Heißpressen besitzen. Beispielsweise hat eine Fläche senkrecht zur Pressrichtung (maximaler Druck) einem Winkel α = 90 Grad. Dadurch wird sichergestellt, dass der Heißpressdruck an allen Flächen des Formteils angelegt werden kann. Auf Flächen parallel zur Druckrichtung beim Heißpressen kann kein Druck ausgeübt werden. Endgeformte Formteile können unterschiedlichste Produkte darstellen, beispielweise Becher, Behälter, Gefäße, Deckel, Schalen, Portionsgefäße, Umhüllen oder Umgefäße für unterschiedlichste Zwecke.

Das Saugwerkzeug bezeichnet hier das Werkzeug, in dem die Saugköpfe zum Anformen des Formteils angeordnet sind, sodass mit dem Bewegen des Saugwerkzeugs die einzelnen Saugköpfe im Saugwerkzeug gleichermaßen mitbewegt werden. Die Medienversorgung des Saugwerkzeugs mit mehreren Saugköpfen wird im Saugwerkzeug dabei in geeigneter Weise zu den einzelnen Saugköpfen geführt. Ein solches Saugwerkzeug wird als Multiwerkzeug bezeichnet, da es eine Vielzahl an Saugköpfen umfasst. Mit einem Multiwerkzeug können simultan aus einem gemeinsamen Pulpebad eine Vielzahl an Formteilen entsprechend der Anzahl der Saugköpfe angeformt werden, was den Durchsatz der Faserformanlage erhöht und die Faserformanlage somit wirtschaftlicher produzieren lässt.

Das zumindest partielle Eintauchen des Saugwerkzeugs in die Pulpe bezeichnet zumindest ein Berühren der Pulpe mit allen sich im Saugwerkzeug befindlichen Saugköpfen in der Weise, dass aufgrund des mit dem Saugwerkzeug an die Pulpe angelegten Unterdrucks bzw. Saugdrucks das Fasermaterial aus der Pulpe herausgesaugt beziehungsweise die Pulpe mit darin gelöstem Fasermaterial angesaugt wird. Beim partiellem Eintauchen in die Pulpe wird das Saugwerkzeug nicht nur auf die Pulpe aufgesetzt, sondern in sie hineingetaucht. Die Eintauchtiefe des Saugwerkzeugs in die Pulpe hängt von der jeweiligen Anwendung und dem jeweiligen Faserformprozess ab und kann sich je nach Anwendung und gegebenenfalls dem anzuformenden Formteil unterscheiden.

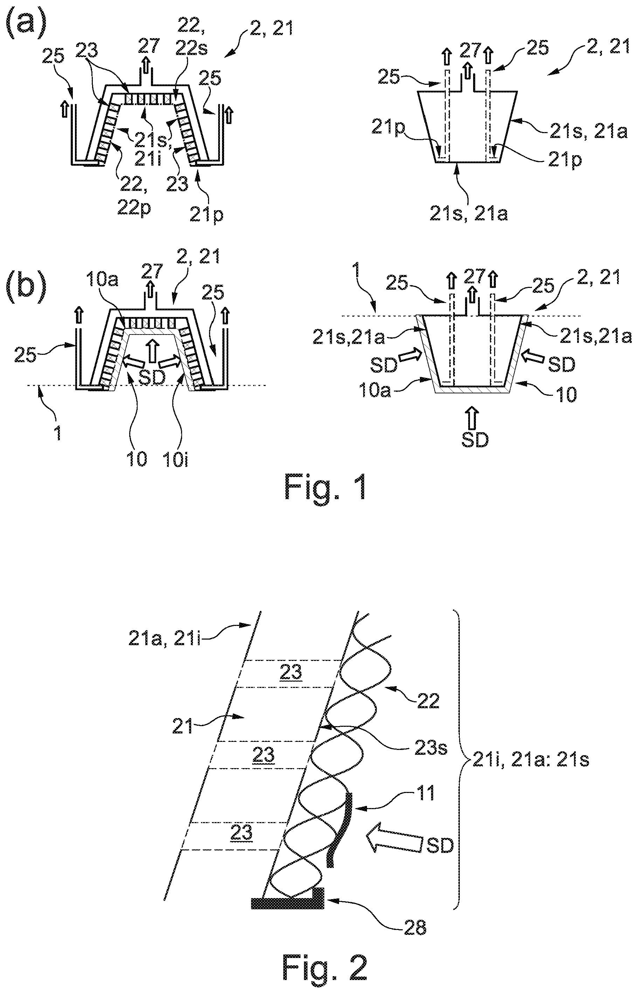

Hierbei kann der Saugkopf eine Negativform besitzen. Als Negativform wird eine Form bezeichnet, wo sich die Saugseite des Saugkopfes, also die Seite, wo sich das Fasermaterial aufgrund der Saugwirkung des Saugkopfes ablagert und damit das Formteil anformt, auf der Innenseite des Saugkopfes befindet, sodass diese Innenseite nach Aufsetzen des Saugkopfes auf die Pulpe oder Eintauchen des Saugkopfes in die Pulpe eine Kavität bildet, in die die Pulpe mit dem Fasermaterial eingesaugt wird (wie in Fig.1 dargestellt). Bei einer Negativform ist die Außenseite des späteren Formteils zur Innenseite des Saugkopfes gerichtet. Das Formteil sitzt nach Anformung daher innen auf der Innenseite des Saugkopfes.

Hierbei kann der Saugkopf auch eine Positivform besitzen. Als Positivform wird eine Form bezeichnet, wo sich die Saugseite des Saugkopfes, also die Seite, wo sich das Fasermaterial aufgrund der Saugwirkung des Saugkopfes ablagert und damit das Formteil anformt, auf der Außenseite des Saugkopfes befindet, sodass diese Außenseite nach Aufsetzen des Saugkopfes auf die Pulpe oder Eintauchen des Saugkopfes in die Pulpe keine Kavität bildet (wie in Fig.1 dargestellt). Bei einer Positivform ist die Innenseite des späteren Formteils zur Außenseiten des Saugkopfes gerichtet. Das Formteil sitzt nach Anformung daher auf der Außenseite des Saugkopfes auf.

Das Anformen des Formteils bezeichnet ein erstes Vorformen des Formteils, wobei sich dieses aus vormals willkürlich in der Pulpe verteiltem Fasermaterial mittels Anlagerung des Fasermaterials an die Kontur des Saugkopfes mit der entsprechenden Kontur bildet. Das angeformte Formteil besitzt noch einen großen Anteil, beispielsweise 70% - 80%, an flüssiger Lösung, beispielsweise Wasser, und ist daher noch nicht stabil formbeständig.

Durch die Anformstation wird auf einfache Weise aus einer Pulpe mit einem Fasermaterial heraus ein Formteil angeformt, die sehr flexibel je nach Ausgestaltung der Kontur des Saugkopfes Formteile mit unterschiedlichsten Konturen liefern kann. Hierbei stellt das Verhältnis Breite beziehungsweise Durchmesser zu Höhe des Formteils keinen einschränkenden oder kritischen Parameter für die Qualität der Herstellung der jeweiligen Formteile dar. Die erfindungsgemäße Anformstation ermöglicht es, die Formteile sehr reproduzierbar und mit großen Genauigkeit und Güte bezüglich Form und Schichtdicke der einzelnen Formteilabschnitte herzustellen. Die Anformstation ist in der Lage, Fasern unterschiedlichster Art zu verarbeiten, sofern diese so in Lösung gebracht werden können, dass eine größere Verklumpung der Fasern in der flüssigen Lösung vor der Verarbeitung vermieden werden kann.

Durch die Verwendung einer ersten Schnittstelle zur Befestigung des Saugwerkzeugs auf der Bewegungseinheit für das Saugwerkzeug können standardisierte Saugwerkzeuge verwendet werden, die einen schnellen und automatischen Austausch des Saugwerkzeugs bei Bedarf ermöglichen.

Als Schnittstelle (erste, zweite, dritte vierte, fünfte, oder weitere Schnittstelle) wird hier der Übergang von dem jeweiligen Werkzeug (Saugwerkzeug, Module des Saugwerkzeugs, Vorpresseinheit, Heißpress-Obereinheit, Heißpress-Untereinheit) auf die das Werkzeug haltende Komponente oder Station bezeichnet. Die Schnittstelle bezeichnet dabei sowohl die Ausformung des Werkzeugs an dem Übergang als auch die Ausformung der haltenden Komponente oder Station an diesem Übergang. Die Ausformung betrifft hier beispielsweise die geometrische Form der beidseitigen Übergänge zueinander, die Befestigungsmittel auf jeweils einer Seite der Schnittstelle, also auf Seiten des Werkzeugs und auf Seiten der haltenden Komponente oder Station, sowie deren Zusammenspiel zur Herstellung einer festen mechanischen Verbindung zum Halten des Werkzeugs auf der entsprechenden Komponente oder Station, sowie die Anschlüsse zur Medienversorgung auf Seiten des Werkzeugs und auf Seiten der haltenden Komponente oder Station, sowie deren Zusammenspiel zur Herstellung einer durch die Schnittstelle hindurchgehenden, fehlerfreien Medienversorgung, beispielsweise in Form von jeweiligen Rohrleitungen mit an den jeweiligen Übergängen befindlichen Steckkupplungen auf beiden Seiten der Schnittstelle, sodass ein entsprechender Medienanschluss durch die Schnittstelle hindurch mittels ineinander eingesteckte Steckkupplungen hergestellt wird.

Die erfindungsgemäße Anformstation ermöglicht somit ein effektives und flexibles Herstellungsverfahren für umweltverträgliche Formteile aus Naturfasern und eine entsprechende Maschine, mit dem unterschiedliche Produkte (Formteile) variable und mit guter Qualität reproduzierbar herzustellen sind.

In einer Ausführungsform ist die erste Schnittstelle durch zueinander kompatible Medienanschlüsse, vorzugsweise Unterdruck- und/oder Überdruckanschlüsse, und zueinander kompatible mechanische Befestigungseinrichtungen auf Seiten der Bewegungseinheit und des Saugwerkzeugs gebildet ist. Hierbei können die zueinander kompatiblen Medienanschlüsse und/oder die kompatiblen mechanischen Befestigungseinrichtungen als reversible Schnellverschlusseinrichtungen, vorzugsweise ein Bajonettverschluss und/oder ineinander einrastende Steckverbindungen, ausgebildet sein. Zueinander kompatibel bezeichnet hierbei beiderseitige Anschlüsse, die mittels Kontakt zueinander geschlossen werden können, sodass die Anschlüsse ihre Funktionen fehlerfrei ausführen können. Durch die zueinander kompatiblen Mittel kann ein schneller und unkomplizierter Wechsel der Werkzeuge durchgeführt werden. Der Begriff "Medienanschluss" bezeichnet für alle in der vorliegenden Erfindung beschriebenen Schnittstellen (erste, zweite, dritte vierte, fünfte, oder weitere Schnittstelle) entsprechende Mittel zur Übergabe bzw. Weiterleitung eines Medium durch die Schnittstelle hindurch. Beispielsweise kann ein Medienanschluss eine Rohrleitung oder eine elektrische Kabelverbindung sein. Durch diese Medienanschlüsse können Medien wie Gas, Flüssigkeiten oder elektrischer Strom hindurchgeleitet werden. Als Schnellspannsysteme kann man konventionell erhältliche Schnellspannsystem verwenden. Alternativ können aber auch Magnetspannsysteme, hydraulische Spanneinheiten, Hebelspanneinrichtungen oder eine mechanische Klauenkupplung verwenden. Diese Schnellspannsysteme besitzen Einführungen zur Zentrierung, geeignete Kraftübertragungselemente sowie Verschlusseinheiten zur Verschlusssicherheit.

In einer Ausführungsform umfasst die Bewegungseinheit einen im Raum frei beweglichen Roboterarm, auf dem das Saugwerkzeug über die erste Schnittstelle montiert ist. Dadurch kann die Anformstation leicht und flexibel ein oder mehrere Vorformstationen und/oder ein oder mehrere Heißpressstationen mit angeformten bzw. vorgeformten Formteilen versorgen. So kann der Herstellungsprozess unter anderem je nach benötigter Produktionsrate beschleunigt oder modifiziert werden. In einer weiteren Ausführungsform ist die Bewegungseinheit daher dazu vorgesehen, die Formteile in dem Saugwerkzeug zur Vorpresseinheit einer Vorformstation und/oder zur Heißpressstation zu transferieren.

In einer weiteren Ausführungsform kann der Roboterarm so angesteuert werden, dass er eine Werkzeugwechselstation für einen Werkzeugwechsel anfährt, um das Saugwerkzeug in einer vorgesehenen Wechselposition abzulegen und dass er die Befestigungseinrichtungen und Medienanschlüsse mechanisch, elektrisch oder hydraulisch so voneinander löst, sodass das Saugwerkzeug nicht mehr mit den Roboterarm verbunden ist. Die Werkzeugwechselposition kann dabei beispielsweise als Tisch mit mehreren darauf vorgesehenen Wechselpositionen ausgeführt sein. Nachdem der Roboterarm frei vom Saugwerkzeug ist, kann er nachfolgend ein anderes Saugwerkzeug beispielsweise von der Werkzeugwechselstation aufnehmen indem er die vorangegangenen Schritte in umgekehrter Reihenfolge ausführt.

In einer weiteren Ausführungsform umfasst das Saugwerkzeug eine Basisplatte mit darauf montierten Saugköpfe und ein Gasleitungssystem in der Basisplatte, das zumindest den Unterdruck bereitgestellt über die erste Schnittstelle an die Saugköpfe als den Saugdruck zum Ansaugen des Fasermaterials verteilt. Das Gasleitungssystem stellt beispielsweise einen Unterdruck zur Erzeugung des Saugdrucks an den Saugköpfen oder Überdruck zum Auswurf der angeformten oder vorgeformten Formteile aus dem Saugwerkzeug an den jeweiligen Saugköpfen bereit. Die Basisplatte kann auf einfache und standardisierte Weise mit der Bewegungseinheit verbunden werden, während sich die darauf montierten Saugköpfe je nach gewünschtem Formteil unterscheiden können. Die Basisplatte ermöglicht einen schnellen Austausch der Saugköpfe bei Bedarf. Der Unterdruck für den Saugdruck kann beispielsweise durch eine Vakuumpumpe positioniert an einem vom Saugwerkzeug entfernten Ort über das Gasleitungssystem zu den Saugköpfen verteilt werden.

In einer weiteren Ausführungsform bildet die Basisplatte eine zweite Schnittstelle mit zu den einzelnen Saugköpfen kompatiblen Medienanschlüssen und kompatiblen mechanischen Befestigungseinrichtungen, damit einzelne oder alle Saugköpfe reversibel mit der Basisplatte verbunden werden können. Dadurch ist es bei einem Werkzeugwechsel beziehungsweise einer Werkzeugvorbereitung auf standardisierte Weise möglich, die Basisplatte mit Saugköpfen schnell und variabel auszurüsten.

In einer weiteren Ausführungsform verästelt sich dazu das Gasleitungssystem in der Basisplatte lateral von zumindest einem Medienanschluss der ersten Schnittstelle zu allen Saugkopfpositionen und wird in Saugrichtung oberhalb der Saugköpfe vertikal zur Basisplatte zu den Saugköpfen geführt, was obigen Werkzeugwechsel beziehungsweise Werkzeugvorbereitung weiter erleichtert. In einer weiteren Ausführungsform sind dazu auch die Saugköpfe mittels einrastender oder klemmbarer Steckverbindungen auf der Basisplatte befestigt. Steckverbindungen ermöglichen einen sehr schnellen Wechsel der Saugköpfe.

In einer weiteren Ausführungsform können sich die Saugköpfe im Saugwerkzeug in ihren Formen zumindest zum Teil unterscheiden, wobei gleiche Formen der Saugköpfe benachbart im Saugwerkzeug in separaten Modulen, gegebenenfalls in unterschiedlich großen Module, angeordnet sind, wobei die Steckverbindungen dieser Module kompatibel zu solchen in der Basisplatte sind. Ein solches Saugwerkzeug ist in der Lage, unterschiedliche Formteile simultan im gleichen Faserformprozess herzustellen. Beispielsweise können so Gefäße wie Becher und dazugehörige Deckel im gleichen Saugwerkzeug simultan angeformt und weiterverarbeitet werden.

In einer weiteren Ausführungsform wird die Saugkopf-Saugseite des Saugkopfes aus einem porösen Sieb gebildet, das im Saugkopf lediglich mit reversiblen Befestigungsmitteln, vorzugsweise Klemmmitteln, befestigt ist, vorzugsweise kann das Sieb in zumindest einigen der Saugkanäle befestigt sein. Das Sieb muss eine Porosität besitzen, damit die Pulpe samt Fasermaterial durch das Sieb angesaugt werden kann und die flüssige Lösung der Pulpe durch das Sieb hindurchtreten kann. Dennoch darf die Porosität des Siebes nicht zu groß sein, damit das Fasermaterial sich auf der Pulpen-Seite anhaften kann. Durch die reversible Halterung des Siebs können die Siebe für Reinigungsprozesse schnell und einfach aus dem Saugwerkzeug entfernt bzw. auf Bedarf ausgetauscht werden. Dieser Austausch wird u.a. auch dadurch begünstigt, dass das Sieb bereits durch seine Auflage auf der saugseitigen Oberfläche abgestützt wird, was zusätzliche Halterungen vermeidet.

Die Erfindung umfasst eine Vorformstation für eine Faserformanlage zum Vorformen eines Formteils aus umweltverträglich abbaubarem Fasermaterial in einem Faserformprozess umfassend eine Vorpresseinheit zur Ausübung eines Vorpressdrucks auf das mittels einer Anformstation gemäß einer der voranstehenden Ansprüche angeformte Formteil zur Reduzierung eines Anteils der flüssigen Lösung im Formteil und zur Formstabilisierung des Formteils, wobei die Vorpresseinheit als Multiwerkzeug mit einer Vielzahl an Vorpress-Unterwerkzeugen angepasst auf das Saugwerkzeug ausgeführt ist, wobei die Vorpresseinheit mit der Vorformstation über eine dritte Schnittstelle geeignet zu einem automatischen Wechsel des Vorpresseinheit reversible montiert ist. Mit dem Begriff "dritte Schnittstelle" wird hier ebenfalls der Übergang von dem jeweiligen Werkzeug (hier die Vorpresseinheit) auf die das Werkzeug haltende Komponente oder Station (hier die Vorformstation) bezeichnet, auf die das für Schnittstellen bereits voranstehend Beschriebene gleichermaßen zutrifft.

Das im Saugwerkzeug verbleibende angeformte Formteil wird für das Vorpressen an das Vorpress-Unterwerkzeug so angesetzt, dass es zwischen Vorpress-Unterwerkzeug und Saugwerkzeug angeordnet ist, damit das Saugwerkzeug mit dem Vorpressdruck auf das Vorpress-Unterwerkzeug gepresst werden kann. In einer Ausführungsform hat das Vorpress-Unterwerkzeug dabei eine dem Formteil zugewandte Pressfläche, die eine geringere Oberflächenrauigkeit besitzt als das Sieb. Hierbei kann das Saugwerkzeug auf ein ruhendes Vorpress-Unterwerkzeug gepresst werden oder das Vorpress-Unterwerkzeug wird auf ein ruhendes Saugwerkzeug gepresst. Die Bezeichnung "ansetzen" bezeichnet nur die relative Bewegung des Saugwerkzeugs zum Vorpress-Unterwerkzeug. Beim Vorpressen stellt das Saugwerkzeug das Vorpress-Oberwerkzeug der Vorpresseinheit dar. In einer Ausführungsform wird das Saugwerkzeug auf das Vorpress-Unterwerkzeug aufgesetzt und mittels einer separaten Presseinheit, vorzugweise einer Kolbenstange, auf das Vorpress-Unterwerkzeug gepresst. Alternativ kann das Saugwerkzeug auch an einem Roboterarm befestigt sein, der den Vorpressdruck selber über das Saugwerkzeug auf das Vorpress-Unterwerkzeug ausübt. Durch die Vorformstation wird so auf einfache Weise aus einem mechanisch noch instabilen Formteil mittels Vorpressen ein für die Weiterbearbeitung hinreichen stabiles vorgeformtes Formteil mit weiter reduziertem Anteil an flüssiger Lösung hergestellt. Auch hier stellt das Verhältnis Breite beziehungsweise Durchmesser zu Höhe des Formteils keinen einschränkenden oder kritischen Parameter für die Qualität der Herstellung der jeweiligen Formteile dar. Die erfindungsgemäße Vorformstation ermöglicht es, die Formteile sehr reproduzierbar und mit großen Genauigkeit und Güte bezüglich Form und Schichtdicke der einzelnen Formteilabschnitte herzustellen und weiterzuverarbeiten. In einer Ausführungsform kann das Vorpressen bei einer Temperatur der Vorpresseinheit kleiner 80°C, vorzugsweise kleiner 50°C, besonders bevorzugt bei Raumtemperatur, durchgeführt werden. Durch das Vorpressen wird der Flüssigkeitsgehalt im Formteil auf ca. 55% - 65% reduziert und das Formteil so vorgefestigt, dass es für eine Werkzeugübergabe hinreichend formstabil ist. Eine zu hohe Temperatur würde den Flüssigkeitsgehalt im Formteil zu weit absenken, wodurch das Material für das nachfolgende Heißpressen bereits zu steif wäre. Gerade die Kombination aus Vorpressen und Heißpressen ermöglicht eine reproduzierbare Herstellung von Formteilen mit guter Qualität und einer geringen Ausschussmenge. In einer weiteren Ausführungsform wird das Vorpressen bei dem Vorpressdruck zwischen 0,2 N/mm² und 0,3 N/mm², vorzugsweise zwischen 0,23 N/mm² und 0,27 N/mm², durchgeführt. Diese gegenüber dem Heißpressdruck geringeren moderaten Drücke ermöglichen ein schonendes Verfestigen des Formteils unter moderater Flüssigkeitsreduktion, was für einen ausschussarmen Heißpressvorgang vorteilhaft ist. Insbesondere können auf diese Weise stabile Formteile einfach, effektiv und flexibel aus umweltverträglich abbaubarem Fasermaterial mit guter Qualität und guter Reproduzierbarkeit hergestellt werden.

Durch die Verwendung einer dritten Schnittstelle zur Befestigung der Vorpresseinheit auf der Vorformstation können standardisierte Vorpresseinheiten verwendet werden, die einen schnellen und automatischen Austausch der jeweiligen Vorpresseinheit bei Bedarf ermöglichen.

Die erfindungsgemäße Vorformstation ermöglicht somit ein effektives und flexibles Herstellungsverfahren für umweltverträgliche Formteile aus Naturfasern und eine entsprechende Maschine, mit dem unterschiedliche Produkte (Formteile) variable und mit guter Qualität reproduzierbar herzustellen sind.

In einer Ausführungsform ist die dritte Schnittstelle durch zueinander kompatible mechanische Befestigungseinrichtungen auf Seiten der Vorpresseinheit und auf Seiten der Vorformstation gebildet, vorzugsweise zusätzlich durch zueinander kompatible Medienanschlüsse, besonders bevorzugt umfassen die Medienanschlüsse Heiz- und/oder Druckgasanschlüsse. Zueinander kompatibel bezeichnet hierbei beiderseitige Anschlüsse, die mittels Kontakt zueinander geschlossen werden können, sodass die Anschlüsse ihre Funktionen fehlerfrei ausführen können. Durch die zueinander kompatiblen Mittel kann ein schneller und unkomplizierter Wechsel der Werkzeuge durchgeführt werden. Die Befestigungseinrichtungen sind bei jeder Vorpresseinheit zur Befestigung an der Vorformstation vorhanden. Medienanschlüsse werden dagegen nur benötigt, falls die Vorpresseinheit auf eine Vorpresstemperatur (kleiner als die Heißpresstemperatur) beheizt werden soll und/oder falls die Vorpresseinheit im Wesentlichen aus einem Elastomer-Material gefertigt ist und während des Vorpressens mit Druckluft beaufschlagt werden soll.

Hierbei können die zueinander kompatiblen mechanischen Befestigungseinrichtungen, ein reversibles Schnellspannsystem, vorzugsweise ein Bajonettverschluss und/oder ineinander einrastende Steckverbindungen, sein. Gleiches gilt auch, falls zueinander kompatiblen Medienanschlüsse an der dritten Schnittstelle vorhanden sind.

In einer weiteren Ausführungsform umfasst die dritte Schnittstelle auf Seiten der Vorpresseinheit eine Trägerplatte, auf der die Vorpress-Unterwerkzeuge angeordnet sind. Durch die Trägerplatte ist die Schnittstelle auf Seiten der Vorpresseinheit leicht zu standardisieren und die Trägerplatte ist zudem mechanisch robust für die anstehenden Werkzeugwechsel herstellbar. Die Schnittstelle auf Seiten der Vorformstation kann leicht an die Dimensionen und Ausführungen der Trägerplatte angepasst werden, sodass der Werkzeugwechsel zuverlässig ausgeführt werden kann.

In einer weiteren Ausführungsform umfasst die Trägerplatte eine Transportschnittstelle zum automatischen Wechsel der Vorpresseinheit durch eine Bewegungseinheit. Hierbei ist die das Werkzeug wechselnde Bewegungseinheit vorzugsweise die Bewegungseinheit der Anformstation, die ansonsten das Saugwerkzeug trägt. Die Transportschnittstelle kann dabei seitlich an der Trägerplatte außerhalb der Anordnung der Vorpress-Unterwerkzeuge angeordnet sein. Für diesen Werkzeugwechsel müssen die Medienanschlüsse der Bewegungseinheit nicht kompatibel zur Vorpresseinheit sein, noch mit diesen der Vorpresseinheit in Verbindung stehen, da die Transportschnittstelle der Vorpresseinheit separat zur dritten Schnittstelle an der Trägerplatte angeordnet ist.

In einer weiteren Ausführungsform ist die Transportschnittstelle so angeordnet, dass die Vorpresseinheit von der Bewegungseinheit der Anformstation über die erste Schnittstelle auf Seiten der Bewegungseinheit während eines Werkzeugwechsels von der Vorformstation entfernt oder in diese eingesetzt werden kann. Da Saugwerkzeug und Vorpresseinheit für das Ausführen des Vorpressens aufeinander angepasst sein müssen, bedingt ein Wechsel des Saugwerkzeugs ebenfalls ein Wechsel der Vorpresseinheit. Hier könnte beispielsweise das Saugwerkzeug auf einer Wechselposition abgelegt werden, anschließend entfernt die vom Saugwerkzeug freigewordene Bewegungseinheit (beispielsweise der freigewordene Roboterarm) die Vorpresseinheit ebenfalls aus der Vorformstation und legt diese ebenfalls auf der Wechselstation ab. Nachfolgend wird die neue Vorpresseinheit, die sich zum Werkzeugwechsel ebenfalls auf dem Wechseltisch befunden hat, in die Vorformstation eingesetzt. Anschließend nimmt die Bewegungseinheit das neue Saugwerkzeug, das sich ebenfalls auf dem Wechseltisch befunden hat, zur weiteren Produktion auf. Die Transportschnittstelle kann in dieser Ausführungsform kompatibel zur ersten Schnittstelle bezüglich der Befestigungseinrichtungen ausgeführt sein, damit die Bewegungseinheit sowohl das Saugwerkzeug als auch für einen Werkzeugwechsel die Vorpresseinheit tragen kann. Für diesen Werkzeugwechsel müssen die Medienanschlüsse der Bewegungseinheit nicht kompatibel zur Vorpresseinheit sein, noch mit diesen der Vorpresseinheit in Verbindung stehen, da die Transportschnittstelle der Vorpresseinheit separat zur dritten Schnittstelle an der Trägerplatte angeordnet ist.

In einer weiteren Ausführungsform umfasst die Trägerplatte zusätzlich ein Heizelement, vorzugsweise ein sich flächenförmig über die Trägerplatte erstreckendes Heizelement, zur Beheizung der Vorpress-Unterwerkzeuge. Dieser modulartige Aufbau erleichtert die Handhabung der Komponenten und ihre Austauschbarkeit.

In einer weiteren Ausführungsform ist das Vorpress-Unterwerkzeug zumindest zum Teil aus einem Elastomer, vorzugsweise Silikon, gefertigt und besitzt einen Hohlraum, der von einer Wand aus dem Elastomer als Pressfläche umhüllt ist, wobei die Vorpresseinheit dazu ausgestaltet ist, den Hohlraum beim Vorpressen mit Gasdruck zu beaufschlagen, um den Vorpressdruck zu erzeugen oder zumindest zu unterstützen. Vorpress-Unterwerkzeuge aus einem Elastomer oder zumindest teilweise aus Elastomer sind unter anderem dadurch vorteilhaft, da sich das Elastomer unter Druck noch leicht verformen lässt und sich somit an ein sich möglicherweise unter dem Vorpressdruck verbiegendes Saugwerkzeug als Multiwerkzeug flexibel anpasst und damit die Homogenität der Formung der diversen Formteile im Multi-Saugwerkzeug verbessert. Für erhöhte Vorpress-Temperaturen unterhalb von 100°C ist beispielsweise Silikon als Elastomer als ein in diesem Bereich temperaturbeständiges Material ebenfalls gut geeignet. Durch die Beaufschlagung mit Gasdruck werden die Vorpress-Unterwerkzeuge rückseitig "aufgeblasen" und fügen sich besonders gut an die Kontur des Formteils an, sodass der Vorformprozess qualitativ, insbesondere zur reproduzierbaren Herstellung sehr gleicher Formteile, verbessert wird.

In einer Ausführungsform umfasst die Vorformstation des Weiteren eine Pulpe-Aufbereitungs- und Nachlieferungseinheit für die Nachlieferung der Pulpe für das Reservoir. So kann die Pulpe beim Verbrauch durch das Anformen ständig mit kontrollierter Qualität und gleichbleibender Konzentration dem Reservoir zugeführt werden. Die beim Anformen abgeführte flüssige Lösung kann dadurch nach einem Aufbereiten, beispielsweise einer Zugabe an Fasermaterial zur Einstellung der gewünschten Konzentration des Fasermaterials in der Pulpe wieder in das Reservoir zurückgeführt und somit im Faserformprozess wiederverwendet werden. In einer weiteren Ausführungsform füllt daher die Pulpe-Aufbereitungs- und Nachlieferungseinheit das Reservoir in Abhängigkeit vom Pulpe-Verbrauch durch das Anformen des Formteils zumindest periodisch, vorzugsweise kontinuierlich, auf, um einen benötigten Füllstand des Reservoirs für das Anformen sicherzustellen.

Die Erfindung umfasst ferner eine Heißpressstation für eine Faserformanlage zum Endformen eines Formteils aus umweltverträglich abbaubarem Fasermaterial in einem Faserformprozess umfassend ein Heißpress-Untereinheit als Multiwerkzeug mit einer Vielzahl an Heißpress-Unterwerkzeugen jeweils angepasst an eine Kontur des Formteils zu dessen Aufnahme durch die jeweiligen Heißpress-Unterwerkzeuge und eine Heißpress-Obereinheit als Multiwerkzeug mit einer Vielzahl entsprechend an das Formteil angepassten Heißpress-Oberwerkzeugen zum Auf- oder Einsetzen auf oder in das Formteil entlang einer Schließrichtung für die Heißpressstation, wobei die Heißpress-Untereinheit und/oder die Heißpress-Obereinheit zur Ausübung eines Heißpressdrucks auf die beim Heißpressen zwischen den jeweiligen Heißpress-Unterwerkzeugen und Heißpress-Oberwerkzeugen angeordneten Formteilen vorgesehen sind, wobei die Heißpress-Obereinheit und die Heißpress-Untereinheit mit der Heißpressstation über jeweils vierte Schnittstellen geeignet zu einem automatischen Wechsel der Heißpress-Obereinheit und/oder der Heißpress-Untereinheit reversible montiert sind. Mit dem Begriff "vierte Schnittstelle" wird hier ebenfalls der Übergang von dem jeweiligen Werkzeug (hier die Heißpress-Obereinheiten und Heißpress-Untereinheiten) auf die das Werkzeug haltende Komponente oder Station (hier die Heißpressstation) bezeichnet, auf die das für Schnittstellen bereits voranstehend Beschriebene gleichermaßen zutrifft.

Nach erfolgtem Vorpressen wird das vorgeformte Formteils vorzugsweise mittels des Saugwerkzeugs an die Heißpressstation übergeben, wobei dazu das Formteil zum nachfolgenden Heißpressen aus dem Saugwerkzeug entfernt wird. Die Übergabe ist insofern vorteilhaft, da das Heißpressen bei hoher Temperatur mit deutlich höherem Druck durchgeführt wird. Falls das Formteil ohne Übergabe zum Heißpressen im Saugwerkzeug verbleiben würde, könnte sich das Fasermaterial im Sieb des Saugwerkzeugs verhaken und nur schwer, ggf. nur unter Beschädigung nach dem Heißpressen aus dem Saugwerkzeug entfernt werden. Außerdem könnte das Sieb durch den hohen Druck beschädigt werden, sodass das Saugwerkzeug danach nicht mehr funktionsfähig wäre. Die Übergabe kann dabei so erfolgen, dass das oder die Formteile aus dem Saugwerkzeug passiv durch Ablegen oder aktiv mittels eines Auswerfdrucks im Saugwerkzeug gegen die Formteile an die Heißpressstation übergeben werden. Mit dem Heißpressen des vorgepressten Formteils mit einem Heißpressdruck wird das Formteil bei weiterer Reduktion des Anteils der flüssigen Lösung im Formteil, beispielsweise auf unter 10%, vorzugsweise auf circa 7%, endgeformt, wonach es anschließend stabil und formbeständig ist. Vorzugsweise sind die Heißpress-Unter- und Oberwerkzeuge aus Metall gefertigt. Das Heißpressen wird dabei bei dem Heißpressdruck höher dem Vorpressdruck durchgeführt, beispielsweise bei einem Heißpressdruck zwischen 0,5 N/mm² und 1,5 N/mm², vorzugsweise zwischen 0,8 N/mm² und 1,2 N/mm². Der Heißpressdruck kann dabei für eine Presszeit von weniger als 20s, bevorzugt dabei von mehr als 8s, besonders bevorzugt zwischen 10 und 14s, noch mehr bevorzugt von 12s, angelegt werden. Der Heißpressdruck wird beispielsweise über eine Kolbenstange hydraulisch an die Heißpressstation angelegt, wobei diese Kolbenstange beispielsweise auf das Heißpress-Oberwerkzeug drückt, das dann wiederum auf das ruhende Heißpress-Unterwerkzeug drückt, mit dem Formteil dazwischen. Die Anordnung könnte auch umgekehrt ausgeführt sein. Durch die Heißpressstation wird auf einfache Weise aus einem vorgeformten und noch leicht variablen Formteil mittels Heißpressen ein für die Weiterbearbeitung endgeformtes Formteil mit deutlich reduziertem Anteil an flüssiger Lösung hergestellt. Auch hier stellt das Verhältnis Breite beziehungsweise Durchmesser zu Höhe des Formteils keinen einschränkenden oder kritischen Parameter für die Qualität der Herstellung der jeweiligen Formteile dar. Die erfindungsgemäße Heißpressstation ermöglicht es, die Formteile sehr reproduzierbar und mit großen Genauigkeit und Güte bezüglich Form und Schichtdicke der einzelnen Formteilabschnitte herzustellen und weiterzuverarbeiten. Insbesondere können auf diese Weise endstabile Formteile einfach, effektiv und flexibel aus umweltverträglich abbaubarem Fasermaterial mit guter Qualität und guter Reproduzierbarkeit hergestellt werden.

Durch die Verwendung einer vierten Schnittstelle zur Befestigung der Heißpress-Obereinheit und die Heißpress-Untereinheit jeweils mit der Heißpressstation können standardisierte Heißpress-Obereinheiten und Heißpress-Untereinheiten verwendet werden, die einen schnellen und automatischen Austausch der jeweiligen Heißpress-Obereinheiten und Heißpress-Untereinheiten bei Bedarf ermöglichen. Hierbei kann entweder eine Heißpress-Obereinheit oder Heißpress-Untereinheit alleine beispielsweise zu Wartungszwecken gewechselt werden. Sofern die Produktion auf ein anderes Formteil umgestellt werden soll, müssen beide Heißpress-Ober- und Untereinheiten gewechselt werden, da diese für den Heißpressvorgang von ihrer Form auseinander angepasst sind, damit das Formteil zwischen beiden Einheiten heißgepresst werden kann.

Die erfindungsgemäße Vorformstation ermöglicht somit ein effektives und flexibles Herstellungsverfahren für umweltverträgliche Formteile aus Naturfasern und eine entsprechende Maschine, mit dem unterschiedliche Produkte (Formteile) variable und mit guter Qualität reproduzierbar herzustellen sind.

In einer Ausführungsform ist die vierte Schnittstelle durch eine zueinander kompatible mechanische Befestigungseinrichtung und zueinander kompatible Medienanschlüsse auf Seiten der Heißpress-Obereinheit und/oder Heißpress-Untereinheit und auf Seiten einer entsprechenden Haltevorrichtung der Heißpressstation gebildet. Zueinander kompatibel bezeichnet hierbei beiderseitige Anschlüsse, die mittels Kontakt zueinander geschlossen werden können, sodass die Anschlüsse ihre Funktionen fehlerfrei ausführen können. Durch die zueinander kompatiblen Mittel kann ein schneller und unkomplizierter Wechsel der Werkzeuge durchgeführt werden. Die Medienanschlüsse betreffen hier neben Heizanschlüssen (beispielsweise elektrische Heizanschlüsse wie kompatible Stecker) gegebenenfalls auch Druckgas- und Vakuumanschlüsse. Diese Gasanschlüsse können beispielsweise dazu verwendet werden, um Formteile in den jeweiligen Heißpress-Oberwerkzeugen je nach Prozessschritt mittels Unterdruck zu halten und/oder mittels Überdruck die endgeformten Formteile aus den Heißpress-Oberwerkzeugen anzugeben. Die Haltevorrichtungen in der Heißpressstation können dabei als Halteplatten ausgeführt werden.

In einer weiteren Ausführungsform sind die kompatible mechanische Befestigungseinrichtung und/oder die zueinander kompatiblen Medienanschlüsse als ein reversibles Schnellspannsystem, vorzugsweise ein Bajonettverschluss und/oder ineinander einrastende Steckverbindungen.

In einer weiteren Ausführungsform umfassen die Haltevorrichtungen auf ihren den jeweiligen Heißpress-Ober- und -Untereinheiten zugewandten Seiten zumindest zwei definierte Werkzeugnullpunkte zu einem positionsgenauen Aufsetzen der Heißpress-Obereinheit und/oder Heißpress-Untereinheit auf die jeweiligen Haltvorrichtungen. Die Werkzeugnullpunkte können als mechanische Anschläge mit entsprechenden Gegenformen in den Heißpress-Ober- und -Untereinheiten sein, damit die Position der Heißpress-Ober- und -Untereinheiten relativ zur Haltevorrichtung definiert festgelegt ist. Hierbei können die Werkzeugnullpunkte selbstzentrierend ausgeführt sein, was eine Montage der Heißpress-Ober- und -Untereinheiten auf die Haltevorrichtung erleichtert und Montagefehler vermeidet und eine Temperaturkompensation umfassen, damit Temperaturschwankungen keinen Einfluss auf die Position der Heißpress-Ober- und -Untereinheiten relativ zur Haltevorrichtung und damit im Heißpressstation auch nicht auf die Positionen der Heißpress-Ober- und -Untereinheiten zueinander haben. Die Lage der Werkzeugnullpunkte ist zur Temperaturkompensation so gewählt, dass sich das Werkzeug von dieser Position in alle Richtungen gleich ausdehnt. D.h. Unabhängig von der Temperatur befinden sich alle Koordinaten von Ober und Unterwerkzeug immer an der gleichen Stelle trotz thermischer Ausdehnung.

In einer weiteren Ausführungsform umfasst die Haltevorrichtung der Heißpressstation für die Heißpress-Obereinheit eine Absturzsicherung gegen Lösung der Heißpress-Obereinheit von der Halteplatte. Versehentlich herunterfallende Heißpress-Oberwerkzeuge können die darunterliegenden Maschinenkomponenten beschädigen und ggf. Personen gefährden, was durch die Absturzsicherung u.a. vermieden wird.

In einer weiteren Ausführungsform umfasst die Haltevorrichtung eine zusätzliche Transportschnittstelle zum automatischen Wechsel der Heißpress-Obereinheit und/oder der Heißpress-Untereinheit durch eine Bewegungseinheit. Die Transportschnittstelle kann dabei seitlich an den Heißpress-Ober- und -Untereinheiten außerhalb der Anordnung der Heißpress-Unter- und -Oberwerkzeuge angeordnet sein. Für diesen Werkzeugwechsel müssen die Medienanschlüsse der Bewegungseinheit nicht kompatibel zu den Heißpress-Ober- und -Untereinheiten sein, noch mit diesen der Heißpress-Ober- und -Untereinheiten in Verbindung stehen, da die Transportschnittstelle der Heißpress-Ober- und -Untereinheiten separat zur vierten Schnittstelle angeordnet ist. Beispielsweise kann die Transportschnittstelle hier senkrecht zur Schließrichtung für die Heißpressstation angeordnet sein, um u.a. einfacher für einen Werkzeugwechsel zugänglich zu sein. In einer weiteren Ausführungsform umfasst die Transportschnittstelle die Druckgas- und Vakuumanschlüsse (Medienanschlüsse).

In einer weiteren Ausführungsform ist die Transportschnittstelle so angeordnet ist, dass Heißpress-Ober- und -Untereinheiten von der Bewegungseinheit der Anformstation über die erste Schnittstelle auf Seiten der Bewegungseinheit während eines Werkzeugwechsels von der Heißpressstation entfernt oder in diese eingesetzt werden kann. Dadurch kann im Falle der Bewegungseinheit gleich der Bewegungseinheit der Anformstation der Werkzeugwechsel der gesamten Faserformanlage analog zu dem voranstehend beschriebenen Werkzeugwechsel für Anform- und Vorformstation auch für die Heißpressstation mit entsprechend gestaltetem einer entsprechend für die auszutauschenden Heißpress-Ober- und -Untereinheiten erweiterten Wechselstation ausgeführt werden.

In einer weiteren Ausführungsform umfasst die Haltevorrichtungen separat von der Transportschnittstelle eine Heizstromschnittstelle zur Übergabe eines Heizstroms an die Heißpress-Obereinheit und/oder Heißpress-Untereinheit. Durch die separate Heizstromschnittstelle können u.a. die benötigten Heizströme, insbesondere bei großen Heizströmen, einfacher und gegebenenfalls sicherer den Heißpress-Unter und -Obereinheiten zugeführt werden. Die dem Formteil zugewandte Heißpressseiten des Heißpress-Unterwerkzeugs und des Heißpress-Oberwerkzeugs können beispielsweise mittels elektrischer Heizpatronen beheizt werden.

In einer weiteren Ausführungsform umfasst die vierte Schnittstelle auf Seiten der Heißpress-Obereinheit und der Heißpress-Untereinheit jeweils eine Trägerplatte, auf der die Heißpress-Unterwerkzeuge bzw. Heißpress-Oberwerkzeuge angeordnet sind. Durch die Trägerplatte für die Heißpress-Ober- und Untereinheiten ist die Schnittstelle auf Seiten der Heißpress-Ober- und Untereinheiten leicht zu standardisieren. Außerdem ist die Trägerplatte zudem mechanisch robust für die anstehenden Werkzeugwechsel herstellbar. Die Schnittstelle auf Seiten der Heißpressstation kann leicht an die Dimensionen und Ausführungen der Trägerplatte angepasst werden, sodass der Werkzeugwechsel zuverlässig ausgeführt werden kann.

In einer weiteren Ausführungsform umfassen die jeweiligen Trägerplatten eine Wärmeisolationsschicht, um die jeweiligen Trägerplatten gegen die Haltevorrichtung thermisch zu isolieren. Damit kann u.a. die Prozesstemperatur möglichst konstant gehalten werden, um die notwendige Heizleistung für die Heißpress-Ober- und Untereinheiten möglichst gering zu halten.

In einer weiteren Ausführungsform sind in der Trägerplatte zwischen der Wärmeisolationsschicht und einer der Haltevorrichtung zugewandten Seite der Trägerplatte ein oder mehrere Dehnungsmittel angeordnet, um eine Positionstreue der Trägerplatte zur Haltevorrichtung zu verbessern. Damit können Temperaturschwankungen beim Öffnen und Schließen der Heißpressstation gegenüber den Halterungen und anderen Komponenten ausgeglichen werden.

In einer weiteren Ausführungsform umfasst die Trägerplatte der Heißpress-Obereinheit ein Gasleitungssystem, um in den jeweiligen Heißpress-Oberwerkzeugen je nach Prozessschritt einen Unterdruck zum Halten der Formteile in und/oder einen Überdruck zum Ausgeben der endgeformten Formteile aus den Heißpress-Oberwerkzeugen anzulegen. Die Integration das Gasleitungssystem in die Trägerplatte erleichtert das Bereitstellen von standardisierten Anschlüssen an den jeweiligen Schnittstellen.

In einer weiteren Ausführungsform verästelt sich das Gasleitungssystem in der Trägerplatte lateral von zumindest einem Medienanschluss der vierten Schnittstelle zu allen Positionen der Heißpress-Unterwerkzeuge bzw. Heißpress-Oberwerkzeuge und wird in Schließrichtung der Heißpressstation vertikal zur Trägerplatte den Heißpress-Unterwerkzeugen bzw. Heißpress-Oberwerkzeugen zugeführt, was obigen Werkzeugwechsel beziehungsweise Werkzeugvorbereitung weiter erleichtert.

In einer weiteren Ausführungsform sind die Heißpress-Obereinheit und die Heißpress-Untereinheit jeweils in der Heißpressstation seitlich verfahrbar gelagert, um einen Werkzeugwechsel der jeweiligen Heißpress-Untereinheit und Heißpress-Obereinheit außerhalb eines Prozessraums der Heißpressstation zu ermöglichen. Dadurch werden Wechsel einfach und schnell durchführbar.

In einer weiteren Ausführungsform sind sowohl in der Heißpress-Untereinheit als auch in der Heißpress-Obereinheit jeweils ein oder mehrere Heizpatronen so angeordnet, um die Heißpress-Unterwerkzeuge und Heißpress-Oberwerkzeuge auf Temperaturen größer 150°C, vorzugsweise zwischen 180°C und 250°C, aufzuheizen. Elektrische Heizpatronen ermöglichen ein schnelles Aufheizen des Heißpress-Unterwerkzeugs und des Heißpress-Oberwerkzeugs beim Schließen der Werkzeuge, nachdem die Werkzeuge sich durch das Öffnen der Heißpressstation zur Entnahme der endgeformten Formteile abgekühlt hat.

Damit kann eine Reduktion der Flüssigkeit (oder Feuchtigkeit) im Formteil auf unter 10% schnell und zuverlässig erreicht werden.

Die Erfindung betrifft somit eine Faserformanlage umfassend zumindest eine erfindungsgemäße Anformstation, eine erfindungsgemäße Vorformstation und eine erfindungsgemäße Heißpressstation zur Herstellung von Formteilen aus umweltverträglich abbaubarem Fasermaterial mittels eines in der Faserformanlage ausgeführten Faserformprozess, wobei die Faserformanlage dazu ausgestaltet ist, einen automatischen Wechsel von Werkzeugen aus der Anformstation, Vorformstation und/oder Heißpressstation zu ermöglichen. Die erfindungsgemäße Faserformanlage ermöglicht somit ein effektives und flexibles Herstellungsverfahren für umweltverträgliche Formteile aus Naturfasern und eine entsprechende Maschine, mit dem unterschiedliche Produkte (Formteile) variable und mit guter Qualität reproduzierbar herzustellen sind.

Zudem umfasst die Faserformanlage dazu zumindest eine Werkzeugwechselstation, in der zumindest ein Werkzeug der Gruppe der Werkzeuge umfassend das Saugwerkzeug, die Vorpresseinheit, die Heißpress-Obereinheit und/oder die Heißpress-Untereinheit für einen automatischen Werkzeugwechsel gegen das jeweilige andere Werkzeug in der Faserformanlage positioniert werden kann. Die Wechselstation kann dabei als Wechseltisch mit entsprechenden Positionen für die auszutauschenden Werkzeuge oder als Regal mit entsprechenden Ablagepositionen ausgeführt sein. Die Werkzeugwechselstation sollte dabei zumindest ausreichend Raum für die Ablage des auszutauschenden Werkzeugs und die Aufnahme des nachfolgenden Werkzeugs umfassen. Vorzugsweise umfasst die Werkzeugwechselstation ausreichend Raum für alle in der Faserformanlage auszutauschenden und aufzunehmenden Werkzeuge. Vorzugsweise sind dabei die Werkzeuge und die dafür vorgesehenen Werkzeugpositionen mittels eines Identifikationskodierung am jeweiligen Werkzeug eindeutig bezeichnet. Die dem Werkzeug zugeordneten Werkzeugpositionen können ebenfalls kodiert sein oder sind in einer Tabelle in der Steuerung der Bewegungseinheit zur Ausführung abgelegt. Die Werkzeugwechselstation umfasst dazu geeignete Identifikationsmarkierungsleser, beispielsweise Barcode-Leser oder RFID-Lesegeräte.

In einer weiteren Ausführungsform umfasst die Werkzeugwechselstation eine Mehrzahl an Werkzeugwechselpositionen, die an die Form des jeweiligen Werkzeugs angepasst sind. Somit geht aus der Lage des Werkzeugs eindeutig die Zuordnung des Werkzeugs zu einer entsprechenden Station (Anform-, Vorform, oder Heißpressstation) hervor.

In einer weiteren Ausführungsform umfasst die Werkzeugwechselstation ein Transportband für die zu wechselnden Werkzeuge, das dazu ausgestaltet ist, die zu wechselnden Werkzeuge an die jeweiligen Werkzeugwechselpositionen zu transportieren bzw. das gewechselte Werkzeug aus den Werkzeugwechselpositionen wieder abzutransportieren. Durch das Transportband können die gewechselten bzw. zu wechselnden Werkzeuge aus dem Gefahrenbereich der Bewegungseinheit entfernt bzw. eingespeist werden, sodass die Werkzeuge außerhalb des Gefahrenbereichs für einen Werkzeugwechsel bzw. für eine Wartung vorbereitet werden können.

In einer weiteren Ausführungsform umfasst die Werkzeugwechselstation eine Bewegungseinheit, vorzugsweise ein Roboter mit Greifarm, um die mit dem Transportband bereitgestellten Werkzeuge in die gewünschten Werkzeugwechselpositionen zu setzen, was den Automatisierungsgrad des Werkzeugwechsels weiter steigert, indem An- und Abtransport der Werkzeuge zu/von den Wechselpositionen beschleunigt.

In einer weiteren alternativen Ausführungsform umfasst die Werkzeugwechselstation eine als Roboter ausgeführte Bewegungseinheit für die zu wechselnden Werkzeuge, die dazu ausgestaltet ist, die zu wechselnden Werkzeuge an die jeweiligen Werkzeugwechselpositionen zu transportieren bzw. das gewechselte Werkzeug aus den Werkzeugwechselpositionen wieder abzutransportieren. Dadurch kann ein Transportband vermieden werden.

In einer weiteren Ausführungsform sind die Bewegungseinheit der Anformstation, die Vorformstation, die Heißpressstation und die Werkzeugwechselstation so zueinander positioniert, dass die Bewegungseinheit der Anformstation in Funktion als Wechseleinheit die Werkzeuge dieser Stationen automatisch in der Werkzeugwechselstation ablegen und entnehmen kann, wobei zumindest jeweilige Transportschnittstellen der Vorformstation und/oder der Heißpressstation so konfiguriert sind, dass sie kompatibel zu der ersten Schnittstelle der Bewegungseinheit als Wechseleinheit ausgeführt sind. Damit lässt sich die Faserformanlage geeignet für einen automatischen Werkzeugwechsel sehr kompakt bauen und zusätzliche Komponenten zum An- und Abtransport der ausgetauschten Werkzeuge kann vermieden bzw. minimiert werden.

In einer Ausführungsform umfasst die Faserformanlage eine Steuereinheit zur Steuerung zumindest der Anformstation, der Vorformstation und der Heißpressstation sowie weiterer Komponenten. Die Steuereinheit kann als Prozessor, separates Computersystem oder webbasiert ausgeführt sein und ist mit den zu steuernden Komponenten der Faserformanlage geeignet verbunden, beispielweise über Datenkabel oder drahtlos mittels WLAN, Funk oder anderer drahtloser Übertragungsmittel.

In einer weiteren Ausführungsform umfasst die Faserformanlage zusätzlich eine Beschichtungseinheit zum Aufbringen einer oder mehrerer funktionaler Schichten auf das Formteil. Mit solchen funktionalen Schichten können unter anderem zusätzliche Funktionalitäten wie Feuchtigkeits-, Aroma-, Geruchs- oder Geschmacksbarrieren oder Barrieren gegen Fette, Öle, Gase wie beispielsweise O₂ und N₂, leichte Säuren und alle Stoffe, die zur Verderblichkeit von Lebensmitteln beitragen und/oder nicht lebensmitteltauglichen Stoffe auf das Formteil aufgebracht werden. Die Beschichtungseinheit kann hierzu an jeder für die aufzubringende Schicht geeigneten Position in der Prozessabfolge zur Herstellung des Formteils angeordnet sein. Hierbei kann die funktionale Schicht je nach Anwendung im Saugprozess, nach dem Vorpressen oder nach den Heißpressen angeordnet werden. Der Begriff "funktionale Schicht" bezeichnet hier jede zusätzlich auf das ursprüngliche Fasermaterial aufgebrachte Schicht, die sowohl auf einer Innenseite und/oder auf einer Außenseite des Formteils ganzflächig oder in Teilbereichen aufgebracht ist.

In einer weiteren Ausführungsform umfasst die Faserformanlage zusätzlich eine Ausgabeeinheit zum Ausgeben des endgeformten Formteils. Die Ausgabeeinheit gibt dabei das Formteils zum Weitertransport oder zur Weiterbearbeitung aus, beispielsweise zu nachfolgenden Schneid-, Beschriftungs-, Bedruckungs-, Stapel- und/oder Packstationen, beispielsweise mit Hilfe eines Transportbandes.

Die Erfindung betrifft des Weiteren ein Verfahren zum automatischen Wechsel von Werkzeugen in einer erfindungsgemäßen Faserformanlage umfassend nachfolgende Schritte:
- Bereitstellen eines auszuwechselnden Werkzeugs in der Werkzeugwechselstation in einer ersten Wechselposition;
- Ablegen des ausgewechselten Werkzeugs in der Werkzeugwechselstation in einer zweiten Wechselposition;
- Herausnehmen des auszuwechselnden Werkzeugs aus der ersten Wechselposition und Einsetzen dieses Werkzeugs je nach Werkzeug in eine erfindungsgemäße Anformstation, in eine erfindungsgemäße Vorformstation oder in eine erfindungsgemäße Heißpressstation; und
- Abtransport des ausgewechselten Werkzeugs aus der zweiten Wechselposition aus der Werkzeugwechselstation.

Die erfindungsgemäße Faserformanlage ermöglicht somit ein effektives und flexibles Herstellungsverfahren für umweltverträgliche Formteile aus Naturfasern und eine entsprechende Maschine, mit dem unterschiedliche Produkte (Formteile) variable und mit guter Qualität reproduzierbar herzustellen sind.

Es sei ausdrücklich darauf hingewiesen, dass zum Zwecke der besseren Lesbarkeit "mindestens"-Ausdrücke nach Möglichkeit vermieden wurden. Vielmehr ist ein unbestimmter Artikel ("ein", "zwei" etc.) im Normalfall als "mindestens ein, mindestens zwei, etc." zu verstehen, sofern sich nicht aus dem Kontext ergibt, dass dort "genau" die angegebene Anzahl gemeint ist.

An dieser Stelle sei ebenfalls noch erwähnt, dass im Rahmen der hier vorliegenden Patentanmeldung der Ausdruck "insbesondere" immer so zu verstehen ist, dass mit diesem Ausdruck ein optionales, bevorzugtes Merkmal eingeleitet wird. Der Ausdruck ist demzufolge nicht als "und zwar" und nicht als "nämlich" zu verstehen.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

### Kurze Beschreibung der Figuren

Zusätzlich sind weitere Merkmale, Effekte und Vorteile vorliegender Erfindung anhand anliegender Zeichnung und nachfolgender Beschreibung erläutert. Komponenten, welche in den einzelnen Figuren wenigstens im Wesentlichen hinsichtlich ihrer Funktion übereinstimmen, sind hierbei mit gleichen Bezugszeichen gekennzeichnet, wobei die Komponenten nicht in allen Figuren beziffert und erläutert sein müssen.

Die Zeichnung zeigen:
- Fig.1:: eine Ausführungsform des Saugkopfes mit Negativ- und Positivform (a) vor dem Anformen und (b) nach dem Anformen des Formteils;
- Fig.2:: eine Ausführungsform des erfindungsgemäßen Saugkopfes als seitlicher Ausschnitt;
- Fig.3:: eine Ausführungsform des Saugwerkzeugs für die erfindungsgemäße Anformstation im seitlichen Schnitt als Multiwerkzeug mit einer Vielzahl an Saugköpfen;
- Fig.4:: eine weitere Ausführungsform des erfindungsgemäßen Saugwerkzeugs mit Modulen (a) in Draufsicht auf die Saugseite und (b) im seitlichen Schnitt entlang der Schnittebene A-B;
- Fig.5:: eine Ausführung der Basisplatte im Saugwerkzeug der erfindungsgemäßen Anformstation in perspektivischer Ansicht;
- Fig.6:: eine Ausführungsform der erfindungsgemäßen Vorformstationen zusammen mit der erfindungsgemäßen Anformstation;
- Fig.7:: eine Ausführungsform der erfindungsgemäßen Vorpresseinheit als Multiwerkzeug mit einer Vielzahl an Vorpress-Unterwerkzeugen angepasst auf das Saug- werkzeug (a) in perspektivischer Ansicht der Vorpresseinheit und (b) im seitlichen Schnitt eines einzelnen Vorpress-Unterwerkzeugs der Vorpresseinheit;
- Fig.8:: eine Ausführungsform der erfindungsgemäßen Heißpressstation (a) in Seitenansicht und (b) in perspektivischer Ansicht;
- Fig.9:: zeigt eine Ausführungsform einer Trägerplatte für die Heißpress-Obereinheit als Schnittstelle zwischen Heißpressstation und Heißpress-Obereinheit;
- Fig.10:: eine schematische Darstellung einer Ausführungsform des Heißpress-Unterwerkzeug und Heißpress-Oberwerkzeug der Heißpressstation aus Fig.8 beim Heißpressen;
- Fig.11:: eine Ausführung der Trägerplatte in einer Heißpress-Ober- oder -Untereinheit der erfindungsgemäßen Heißpressstation in perspektivischer Ansicht;
- Fig.12:: eine Ausführungsform der erfindungsgemäßen Faserformanlage; und
- Fig.13:: eine schematische Darstellung einer Ausführungsform des erfindungsgemäßen Verfahrens.

### Ausführungsbeispiele

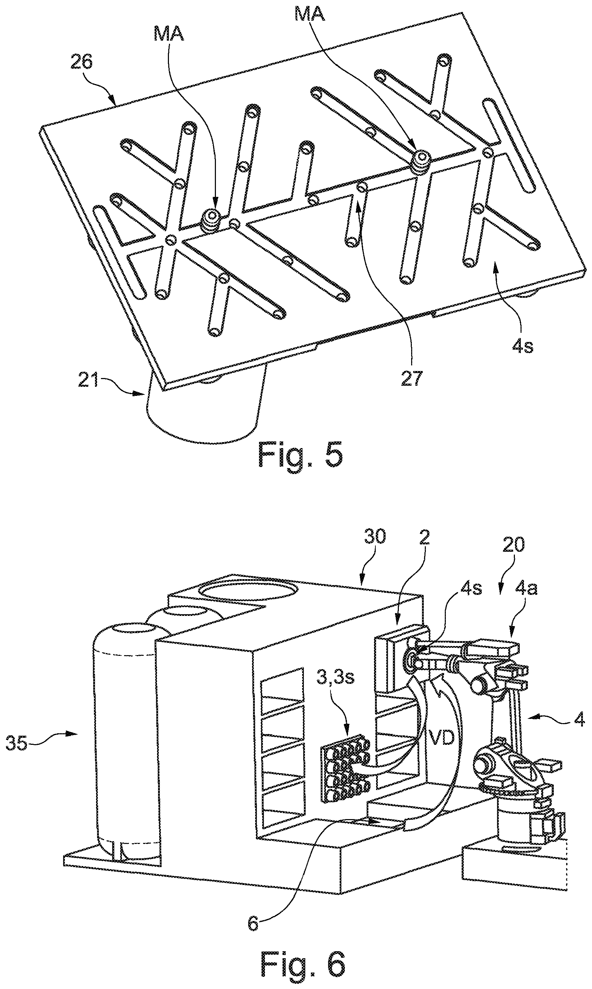

Fig.1 zeigt eine Ausführungsform des Saugkopfes 21 in einem Saugwerkzeug 2 mit Negativ- und Positivform (a) vor dem Anformen und (b) nach dem Anformen des Formteils in einer Anformstation 20 für eine Faserformanlage 100 zum Anformen 210 eines Formteils 10 aus umweltverträglich abbaubarem Fasermaterial 11. Die Anformstation ist global in Fig.6 beschrieben, während hier nur auf das Saugwerkzeug 2 zum Ansaugen des umweltverträglich abbaubaren Fasermaterials 11 für das Anformen 210 des Formteils 10 aus einem Reservoir 6 mit einer Pulpe 1 als flüssige Lösung mit dem umweltverträglich abbaubarem Fasermaterial 11 eingegangen werden soll, wobei das Saugwerkzeug 2 einen Saugkopf 21 mit einer dreidimensional geformten Saugkopf-Saugseite 21s umfasst, die mit ihrer Form an eine Kontur 10i, 10a des späteren Formteils 10 angepasst ist, und das Formteil 10 auf der Saugkopf-Saugseite 21s mittels Unterdruck im Saugwerkzeug 2 angeformt wird. Die Saugkopf-Saugseite 21s des Saugkopfes 21 ist aus einem porösen Sieb 22 gebildet, auf dessen der Pulpe 1 zugewandten Pulpen-Seite 22p die umweltverträglich abbaubare Faser 11 aufgrund des Ansaugens zum Anformen 130 des Formteils 10 anhaftet (siehe Formteil 10 in Fig.2c). Hierzu umfasst das Saugwerkzeug 2 eine Vielzahl an Saugkanälen 23, die auf der saugseitigen Oberfläche 23s unterhalb des Siebes 22 enden und so über die saugseitige Oberfläche 23s verteilt sind, dass eine im Wesentlichen gleiche Saugleistung in allen Bereichen zwischen Sieb 22 und saugseitiger Oberfläche 23s ermöglicht wird. Hierzu können die Saugkanäle 23 Öffnungen in der saugseitigen Oberfläche 23s mit Durchmessern kleiner 4mm besitzen. Die Querschnittsfläche der Saugkanäle 23 kann dabei jede geeignete Form besitzen, beispielsweise kann die Querschnittsfläche kreisförmig oder oval sein. Hierzu weisen die Saugkanäle 23 zudem eine ungleichmäßige Verteilung auf der saugseitigen Oberfläche 23s auf, wobei im Bereich von negativen Kanten im Formteil 10 um 40% - 60% weniger und/oder im Bereich von positiven Kanten 10% - 30% mehr Saugkanäle 23 pro Flächeneinheit als bei gerade Flächen angeordnet sind. Der Saugkopf zum Anformen des Formteils kann lediglich ein klein wenig in die Pulpe 1 eintauchen, damit im Innenraum 21i des Saugkopfes eine abgeschlossene Kavität gebildet wird. In anderen Ausführungsformen könnte der Saugkopf 21 auch vollständig in die Pulpe 1 eingetaucht werden. Die während des Anformens 130 durch das Sieb 22 hindurchtretende flüssige Lösung der Pulpe 1 wird aus dem Saugwerkzeug 2 abgeführt. Dazu umfasst der Saugkopf 21 an seiner der Pulpe 1 zugewandten Stirnseite 21p einen Sammelring 24 zur Aufnahme von der durch die Saugkopf-Saugseite 21s hindurchgesaugten flüssigen Lösung der Pulpe 1, der an einen Abführkanal 25 für die flüssige Lösung angeschlossen ist. Die Saugkopf-Saugseite 21s des Saugkopfes 21 kann entweder als Negativform (linker Teil der Fig.1) als die Saugkopf-Innenseite 21i oder als Positivform (rechter Teil der Fig.1) als die Saugkopf-Außenseite 21a ausgeführt sein. Bei einer Negativform wird das mittels des Saugdrucks SD zur Saugkopf-Innenseite 21i hin angeformte Formteil 10 (graue Innenschicht im Saugkopf 21, Fig.1b links) zum Vorpressen auf das Vorpress-Unterwerkzeug 31 mit einer Pressfläche 31a als Außenfläche des Vorpress-Unterwerkzeugs 31 aufgesetzt. Bei einer Positivform wird zum Ansaugen der Pulpe 1 mit Fasermaterial 11 der Saugkopf 21 zum Kontaktieren 120 vollständig in die Pulpe 1 eingetaucht. Danach wird das aufgrund des Saugdrucks SD zur Saugkopf- Außenseite 21a außen angeformte Formteil 10 (graue Außenschicht auf dem Saugkopf 21,

Fig.1b rechts) zum Vorpressen in das Vorpress-Unterwerkzeug 31 eingesetzt, das eine auf die Positivform des Saugkopfes 21 angepasste Form mit einer Pressfläche 31 als Innenfläche des Vorpress-Unterwerkzeugs 31 besitzt. Der Saugkopf 21 umfasst des Weiteren ein Gasleitungssystem 27, das den bereitgestellten Unterdruck an den Saugkopf 21 als Saugdruck SD weiterleitet. Die Pulpe 1 kann einen Anteil an umweltverträglichem abbaubarem Fasermaterial 11 kleiner 5%, vorzugsweise kleiner 2%, besonders bevorzugt zwischen 0,5% und 1,0 %, in einer flüssigen Lösung, beispielsweise eine wässrige Lösung, enthalten. Vorteilhafter Weise umfasst die Pulpe 1 dabei keinen organischen Binder, vorzugsweise überhaupt keinen Binder. Das umweltverträglich abbaubare Fasermaterial 11 kann dabei im Wesentlichen aus Fasern mit einer Faserlänge kleiner als 5mm bestehen. Die Pulpe 1 wird dabei mit einer Temperatur kleiner oder gleich 80°C, bevorzugt kleiner oder gleich 50°C, besonders bevorzugt mit Raumtemperatur, bereitgestellt.

Fig.2 zeigt eine Ausführungsform des erfindungsgemäßen Saugkopfes 21 als seitlicher Ausschnitt, wobei das Sieb 22 eine wellenförmige Struktur entlang der saugseitigen Oberfläche 23s aufweist. Das Sieb 22 liegt dabei beim Ansaugen auf der saugseitigen Oberfläche 23s auf und wird dadurch in seiner Form von der saugseitigen Oberfläche 23 mechanisch gestützt, damit sich das Sieb 22 im Anformprozess geometrisch nicht verändert und daher eine Formtreue für nachfolgend geformte Formteils gewährleistet. Das Sieb 22 ist im Saugkopf 21 (angedeutet an der unteren Seite) mit einem reversiblen Befestigungsmitteln 28, hier als Klemmmitteln ausgeführt, am Saugkopf 21 befestigt ist. Zusätzlich oder alternativ könnte das Sieb 22 auch in zumindest einigen der Saugkanäle 23 befestigt sein. Zusätzlich ist mit der Faser 11 bespielhaft für das angeformte Fasermaterial 11 angedeutet, wie sich das Fasermaterial 11 auf dem Sieb 22 anformt, sodass durch das Ansaugen der Pulpe das Formteil als Ganzes angeformt wird.

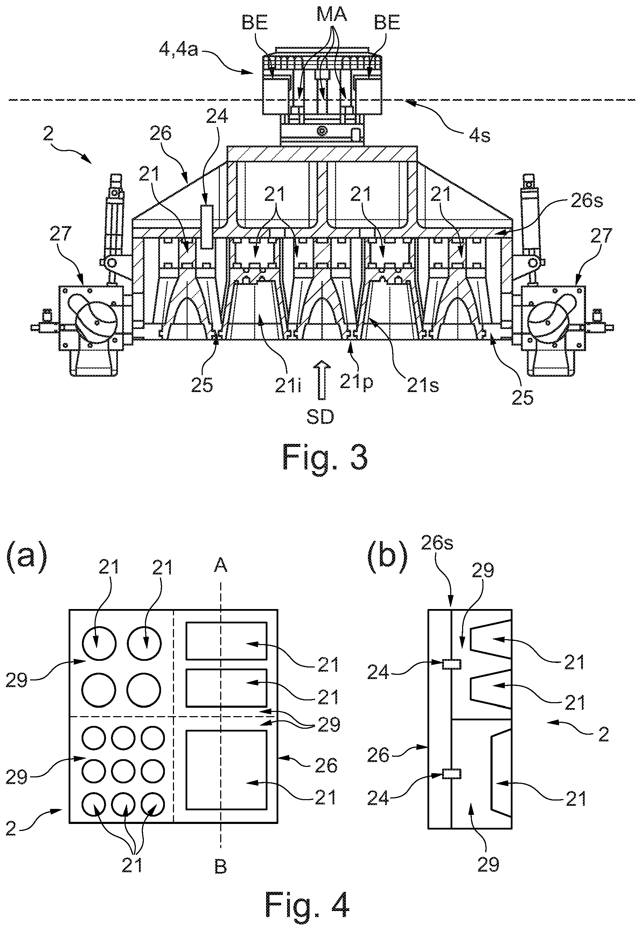

Fig.3 zeigt eine Ausführungsform des Saugwerkzeugs 2 für die erfindungsgemäße Anformstation im seitlichen Schnitt als Multiwerkzeug mit einer Vielzahl an Saugköpfen 21. Die Anformstation umfasst ein Saugwerkzeug 2 mit mehreren Saugköpfe 21 wie beispielsweise in den Figuren 1 und 2 gezeigt und eine Bewegungseinheit 4 zum zumindest partiellen Eintauchen des Saugwerkzeugs 2 in die Pulpe 1, auf der das Saugwerkzeug 2 über eine erste Schnittstelle 4s geeignet zu einem automatischen Wechsel des Saugwerkzeugs 2 reversibel montiert ist. Die Saugköpfe 21 sind auf der Saugseite 21s in einer zweidimensionalen Anordnung mit vier Reihen mit jeweils fünf Saugköpfen 21 angeordnet. In anderen Ausführungsformen können Multiwerkzeuge 2 auch andere Anzahlen an Reihen und Spalten aus Saugköpfen 21 besitzen. Das Saugwerkzeug 2 umfasst hier eine Basisplatte 26 mit darauf montierten Saugköpfe 21 und ein Gasleitungssystem 27 in der Basisplatte 26. Die Basisplatte 26 ist hier nicht ausschließlich als dünne Platte zu verstehen, sondern bezeichnet den hinteren Aufbau des Saugwerkzeugs 2, der zur Verbindung zwischen Bewegungseinheit 4 und Saugköpfen 21 dient. Das Gasleitungssystem 27 verteilt den Unterdruck bereitgestellt durch eine Vakuumpumpe (hier nicht gezeigt) als Saugdruck SD an die Saugköpfe 21 zum Ansaugen des Fasermaterials 11. Das Gasleitungssystem 27 umfasst beispielsweise eine oder mehrere Druckgasleitungen zur Anlegung von Druckluft an die Saugköpfe 21, um beispielsweise die angeformten bzw. vorgeformten Formteile 11 aus den Saugköpfen 21 herauszulösen bzw. herauszugeben. Hierbei umfasst das Gasleitungssystem 27 für den Unterdruck (Saugdruck) zum Anformen der Formteile 11 eine oder mehrere Hauptgasleitungen und Nebengasleitungen, wobei die Hauptgasleitungen beispielsweise zur Erzeugung eines Vorunterdrucks und die Nebengasleitungen beispielsweise als Ergänzung zu den Hauptgasleitungen zur Erreichung des Saugdrucks SD nach Kontaktierung des Saugwerkzeugs 21 mit der Pulpe 1 vorgesehen sind. Vorzugsweise besitzen die Hauptgasleitungen einen großen Querschnitt, während die Nebengasleitungen einen dazu geringeren Querschnitt besitzen. In dem Gasleitungssystem 27 sind ein oder mehrere Ventile angeordnet, um den Saugdruck SD an den Saugköpfen 21 abzuschalten, sobald das Saugwerkzeug die Pulpe 1 verlassen hat, und/oder um zumindest die Nebengasleitungen zu den Hauptleitungen zuzuschalten, sobald das Saugwerkzeug 2 in die Pulpe 1 eingetaucht ist. Das Saugwerkzeug 2 ist mit dem Roboterarm 4a über die Schnittstelle 4s verbunden, die durch zueinander kompatible Medienanschlüsse MA, hier Unterdruck- und Überdruckanschlüsse, und zueinander kompatible Befestigungseinrichtungen auf Seiten der Bewegungseinheit 4 und des Saugwerkzeugs 2 gebildet ist. Die zueinander kompatiblen Medienanschlüsse MA und/oder die kompatiblen mechanischen Befestigungseinrichtungen BE können beispielsweise reversible Schnellverschlusseinrichtungen, vorzugsweise ein Bajonettverschluss und/oder ineinander einrastende Steckverbindungen, sein. Die Bewegungseinheit ist hier als ein im Raum frei beweglicher Roboterarm 4a ausgeführt, auf dem das Saugwerkzeug 2 über die erste Schnittstelle 4s montiert ist. Hierbei kann der Roboterarm 4a so angesteuert werden, dass er eine Werkzeugwechselstation 60 für einen Werkzeugwechsel anfährt, um das Saugwerkzeug 2 in einer vorgesehenen Wechselposition 61 abzulegen und die Befestigungseinrichtungen BE und Medienanschlüsse MA mechanisch, elektrisch oder hydraulisch so voneinander löst, sodass das Saugwerkzeug 2 nicht mehr mit den Roboterarm 4a verbunden ist. Die Bewegungseinheit 4 und Saugwerkzeug 2 sind außerdem dazu ausgestaltet, die Formteile 10 aus den Saugköpfen 21 des Saugwerkzeugs 2 mittels Druckluft bereitgestellt durch die Druckgasleitung 27d und verteilt an die einzelnen Saugköpfe 21 über die Basisplatte 26 auszuwerfen.

Fig.4 zeigt eine weitere Ausführungsform des erfindungsgemäßen Saugwerkzeugs 2 mit Modulen 29 (a) in Draufsicht auf die Saugseite und (b) im seitlichen Schnitt entlang der Schnittebene A-B. Die einzelnen Formen der Saugköpfe 21 im Saugwerkzeug 2 als Multiwerkzeug können sich zumindest zum Teil unterscheiden, wobei hier gleiche Formen der Saugköpfe 21 benachbart im Saugwerkzeug 2 in jeweils separaten Module 29 angeordnet sind. Beispielsweise befinden sich in einem ersten Modul 29 vier Saugköpfe zur Herstellung von größeren Bechern, in einem zweiten Modul 29 sechs Saugköpfe zur Herstellung von kleineren Bechern, in einem dritten Modul 29 zwei Saugköpfe zur Herstellung von kleineren Schalen und in einem vierten Modul 29 ein Saugköpfe zur Herstellung von einer größeren Schale. Die Basisplatte 26 bildet hierbei eine zweite Schnittstelle 26s mit zu den einzelnen Saugköpfen 21 kompatiblen Medienanschlüssen und kompatiblen mechanischen Befestigungseinrichtungen, damit einzelne oder alle Saugköpfe 21 reversibel mit der Basisplatte 26 verbunden werden können. Dabei sind die Saugköpfe 21 bzw. die Module 29 mittels einrastender oder klemmbarer Steckverbindungen 24 auf der Basisplatte 26 befestigt. Die Steckverbindungen 24 dieser Module 29 sind dabei kompatibel zu solchen in der Basisplatte 26.

Fig.5 zeigt eine Ausführung der Basisplatte 26 im Saugwerkzeug 2 der erfindungsgemäßen Anformstation 20 in perspektivischer Ansicht, wobei sich das Gasleitungssystem 27 in der Basisplatte 26 lateral von zwei Medienanschlüssen MA der ersten Schnittstelle 4s zu allen Saugkopfpositionen verästelt und in Saugrichtung oberhalb der Saugköpfe 21 vertikal zur Basisplatte 26 zu den Saugköpfen 21 geführt wird. Als Beispiel für die Vielzahl an Saugköpfen 21 auf der Basisplatte 26 ist hier exemplarisch ein Saugkopf 21 auf der Basisplatte 26 gezeigt.

Fig.6 zeigt eine Ausführungsform der erfindungsgemäßen Vorformstationen 30 zusammen mit der erfindungsgemäßen Anformstation 20. Die Anformstation 20 umfasst dabei das Saugwerkzeug 2 als Multiwerkzeug zum Ansaugen des umweltverträglich abbaubaren Fasermaterials 11 für das Anformen des Formteils 10 aus einem Reservoir 6 mit einer Pulpe 1 als flüssige Lösung mit dem umweltverträglich abbaubarem Fasermaterial 11 (weitere Details zum Saugkopf siehe Fig.1 - 5) und eine Bewegungseinheit 4, auf der das Saugwerkzeug 2 montiert ist, und die zumindest zum Aufsetzen auf oder zum partiellen Eintauchen des Saugwerkzeugs 2 auf oder in die Pulpe 1 vorgesehen ist. Die Vorformstation 30 umfasst eine Vorpresseinheit 3 zur Ausübung eines Vorpressdrucks VD auf das mittels der Anformstation 20 angeformte Formteil 10 zur Reduzierung eines Anteils der flüssigen Lösung im Formteil 10 und zur Formstabilisierung des Formteils 10. Entsprechend des Saugwerkzeugs 2 ist auch die Vorpresseinheit 3 als Multiwerkzeug mit einer Vielzahl an Vorpress-Unterwerkzeugen 31 angepasst auf das Saugwerkzeug 2 ausgeführt, wobei die Vorpresseinheit 3 mit der Vorformstation 30 über eine dritte Schnittstelle 3s reversible montiert, um den automatischen Wechsel des Vorpresseinheit 3 bei Bedarf zu ermöglichen. Die Vorformstation 30 umfasst hier auch ein Reservoir 6 an Pulpe 1 für ein Anformen des Formteils 10 im Saugwerkzeug 2. Das Reservoir 6 ist als waagerechtes nach oben geöffnetes Reservoir 6 angeordnet, damit das Saugwerkzeug 2 einfach durch die Bewegungseinheit 4 in die Pulpe 1 eingetaucht werden kann. Des Weiteren umfasst die Vorformstation 30 eine Pulpe-Aufbereitungs- und Nachlieferungseinheit 35 für die Nachlieferung der Pulpe 1 für das Reservoir 6. In der Pulpe-Aufbereitungs- und Nachlieferungseinheit 35 wird beispielsweise die Pulpe aus einem Lösungsmittel und einem Fasermaterial 11 vorgemischt, zur Produktionspulpe 1 final angemischt, in das Reservoir eingespeist und/oder aus Rückläufen aus Saugwerkzeug 2 und/oder der Vorpresseinheit 3 wiederverwendet, wobei hier der Anteil an dem Fasermaterial 11 wieder auf den gewünschten Anteil eingestellt werden muss, damit die Pulpe 1 nicht im laufenden Prozess an Fasermaterial 11 ausdünnt. Die Vorpresseinheit 3 ist hierbei in einer vertikalen Ausrichtung oberhalb des Reservoirs 6 angeordnet, sodass die durch das Vorpressen aus dem Formteil 10 entfernte flüssige Lösung in das Reservoir 6 zurückgespeist wird. Außerdem kann die Anformstation 20 über geeignete Leitungen so mit der Vorformstation 30 verbunden sein (hier nicht gezeigt), dass die durch den Saugkopf 21 hindurchgetretene flüssige Lösung und/oder Fasermaterial 11 über die Vorformstation 30, hier mittels der Pulpe-Aufbereitungs- und Nachlieferungseinheit 35, wieder in die Pulpe 1 eingespeist wird. Die Bewegungseinheit 4 umfasst hier einen im Raum frei beweglichen Roboterarm 4a, auf dem das Saugwerkzeug 2 montiert ist. Der Roboterarm 4a ist dabei mit der ersten Schnittstelle 4s mit dem Saugwerkzeug 2 verbunden. Die Bewegungseinheit 4 ist außerdem dazu vorgesehen, die Formteile 10 in dem Saugwerkzeug 2 zur Vorpresseinheit 3 der Vorformstation 30 und zur Heißpressstation 40 zu transferieren. Die Bewegungseinheit 4 und das Saugwerkzeug 2 sind dabei dazu ausgestaltet, die angeformten Formteile 10 in der Vorpresseinheit 3 in dem Saugwerkzeug 2 zu belassen. Das Vorpressen wird somit mit einem Vorpress-Unterwerkzeug 31 und dem Saugwerkzeug 2 als das Vorpress-Oberwerkzeug ausgeführt. Hierbei kann der Vorpressdruck beispielsweise mittels einer hydraulisch betriebenen Kolbenstange oder mittels des Roboterarms 4a auf die Formteile 10 zwischen Vorpressunterwerkzeug 31 und Saugwerkzeug 2 ausgeübt werden. Das Vorpressen kann bei einer Temperatur der Vorpresseinheit 3 kleiner 80°C, vorzugsweise kleiner 50°C, besonders bevorzugt bei Raumtemperatur, durchgeführt, wobei der Vorpressdruck VD zwischen 0,2 N/mm² und 0,3 N/mm², vorzugsweise zwischen 0,23 N/mm² und 0,27 N/mm², beträgt. Die Bewegungseinheit 4 und das Saugwerkzeug 2 sind ferner dazu ausgestaltet, die angeformten Formteile 10 in der Heißpressstation für das nachfolgende Heißpressen aus dem Saugwerkzeug 2 auszuwerfen. Dies kann beispielsweise mittels Druckluft erfolgen, die die Formteile 10 aus den Saugköpfen 21 des Saugwerkzeugs 2 auswirft.

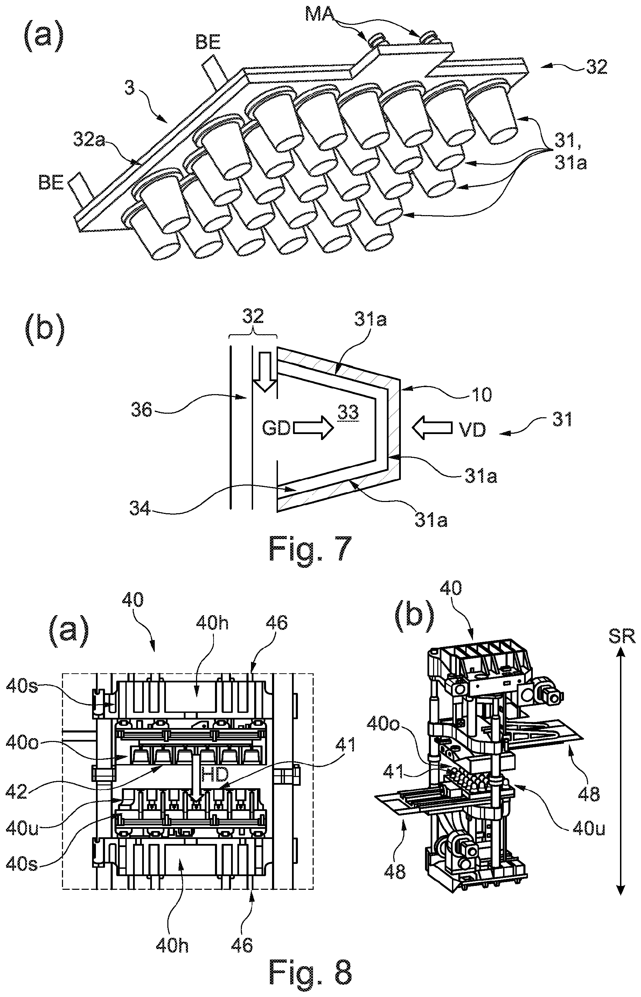

Fig.7 zeigt eine Ausführungsform der erfindungsgemäßen Vorpresseinheit 3 als Multiwerkzeug mit einer Vielzahl an Vorpress-Unterwerkzeugen 31 angepasst auf das Saugwerkzeug 2 (a) in perspektivischer Ansicht der Vorpresseinheit 3 und (b) im seitlichen Schnitt eines einzelnen Vorpress-Unterwerkzeugs 31 der Vorpresseinheit 3. Die dritte Schnittstelle 3s geeignet zum automatischen Wechsel der Vorpresseinheit 3 ist durch zueinander kompatible mechanische Befestigungseinrichtungen BE und zueinander kompatible Medienanschlüsse MA auf Seiten der Vorpresseinheit 3 und auf Seiten der Vorformstation 30 (hier nicht gezeigt) gebildet, wobei Medienanschlüsse MA beispielsweise Heiz- und Druckgasanschlüsse sind. Die kompatiblen mechanischen Befestigungseinrichtungen BE bzw. die zueinander kompatiblen Medienanschlüsse MA können dabei als reversibles Schnellspannsystem, vorzugsweise ein Bajonettverschluss und/oder ineinander einrastende Steckverbindungen, ausgeformt sein. Die dritte Schnittstelle 3s umfasst auf Seiten der Vorpresseinheit 3 eine Trägerplatte 32, auf der die Vorpress-Unterwerkzeuge 31 angeordnet sind. Die Trägerplatte 32 umfasst des Weiteren eine Transportschnittstelle 32s zum automatischen Wechsel der Vorpresseinheit 3 durch eine Bewegungseinheit 4, hier die Bewegungseinheit 4 der Anformstation 20. Dabei ist die Transportschnittstelle 32s als seitliche Rille an der Trägerplatte angeordnet, so dass sie von der Bewegungseinheit 4 während eines Werkzeugwechsels von der Vorformstation 30 entfernt oder in diese eingesetzt werden kann. Das Vorpress-Unterwerkzeug 31 ist hier auf eine Negativform der Saugköpfe 21 angepasst, damit das Formteil 11 so an das Vorpress-Unterwerkzeug 31 angesetzt werden kann, dass es zwischen Vorpress-Unterwerkzeug 31 und Saugwerkzeug 2 angeordnet ist, damit das Saugwerkzeug 2 mit dem Vorpressdruck VD auf das Vorpress-Unterwerkzeug 31 gepresst werden kann. Hierbei hat das Vorpress-Unterwerkzeug 31 eine dem Formteil 10 zugewandte Pressfläche 31a, die eine geringere Oberflächenrauigkeit besitzt als das Sieb 22 des Saugwerkzeugs 2. Das Vorpress-Unterwerkzeug 31 kann beispielsweise aus Metall oder zumindest zum Teil aus einem Elastomer, vorzugsweise Silikon, gefertigt sein. In den hier gezeigten Ausführungsformen ist das Vorpress-Unterwerkzeug 31 zum Teil aus einem Elastomer, hier Silikon, gefertigt. Dabei besitzt das Vorpress-Unterwerkzeug 31 einen Hohlraum 33, der von einer Wand 34 aus dem Elastomer als Pressfläche 31a umhüllt ist, wobei die Vorpresseinheit 3 dazu ausgestaltet ist, den Hohlraum 33 beim Vorpressen mit Gasdruck GD zu beaufschlagen, um den Vorpressdruck VD auf Formteil 10 und Saugwerkzeug 2 zu erzeugen oder zumindest den vom Saugwerkzeug 2 ausgeübten Vorpressdruck mit dem entgegengesetzt gerichteten Gasdruck GD zu unterstützen (siehe Fig. 7b). Im Multiwerkzeug sind die einzelnen Vorpress-Unterwerkzeuge 31 auf einer gemeinsamen Trägerplatte 32 angeordnet, die als Schnittstelle zur Vorpresseinheit 3 zum reversiblen Befestigen an der Vorpresseinheit und/oder zur Versorgung der einzelnen Vorpress-Unterwerkzeuge 31 mit Gasdruck ausgestattet ist. Hier weist die Trägerplatte 32 zusätzlich ein Heizelement 36 auf, das sich flächenförmig über die Trägerplatte 32 erstreckt, um eine Beheizung der Vorpress-Unterwerkzeuge 31 zu ermöglichen.

Fig.8 zeigt eine Ausführungsform der erfindungsgemäßen Heißpressstation 40 (a) in Seitenansicht und (b) in perspektivischer Ansicht umfassend eine Heißpress-Untereinheit 40u als Multiwerkzeug mit einer Vielzahl an Heißpress-Unterwerkzeugen 41 angepasst an eine Kontur 10i des Formteils 10 zur Aufnahme des Formteils 10 und eine Heißpress-Obereinheit 40o ebenfalls als Multiwerkzeug mit einer Vielzahl entsprechend an das Formteil 10 angepassten Heißpress-Oberwerkzeugen 42 zum Auf- oder Einsetzen auf oder in das Formteil 10 entlang einer Schließrichtung SR für die Heißpressstation 40, wobei das Heißpress-Unterwerkzeug 41 und das Heißpress-Oberwerkzeug 42 einen Heißpressdrucks HD auf das beim Heißpressen zwischen Heißpress-Unterwerkzeug 41 und Heißpress-Oberwerkzeug 42 angeordnete Formteil 10 ausüben. Bei einer Negativform eines Saugwerkzeugs 2 besitzt das Heizpress-Unterwerkzeug 41 ebenfalls eine Negativform (wie hier gezeigt) und wird damit als inneres Werkzeug 40i in der Heißpressstation 40 bereitgestellt, während das Heißpress-Oberwerkzeug 42 als äußeres Werkzeug 40a zum Heißpressen darauf aufgesetzt wird. Bei einer Positivform des Saugwerkzeugs 2 (hier nicht gezeigt) besäße das Heizpress-Unterwerkzeug 41 ebenfalls eine Positivform und würde als äußeres Werkzeug 40a bereitgestellt, während das Heißpress-Oberwerkzeug 42 als inneres Werkzeug 40i zum Heißpressen in das Heißpress-Unterwerkzeug 41 eingesetzt würde. Die Heißpress-Obereinheit 40o und die Heißpress-Untereinheit 40u sind dabei mit der Heißpressstation 40 über jeweils vierte Schnittstellen 40s geeignet zu einem automatischen Wechsel der Heißpress-Obereinheit 40o und/oder der Heißpress-Untereinheit 40u reversible montiert. Zusätzlich sind die Heißpress-Obereinheit 40o und die Heißpress-Untereinheit 40u jeweils in der Heißpressstation 40 auf Schienen 48 seitlich verfahrbar gelagert sind, um einen Werkzeugwechsel der jeweiligen Heißpress-Untereinheit 40u und Heißpress-Obereinheit 40o außerhalb eines Prozessraums der Heißpressstation 40 zu ermöglichen. Als Prozessraum wird der Raum bezeichnet, in dem sich die Heißpress-Obereinheit 40o und die Heißpress-Untereinheit 40u zum Heißpressen bewegen. Der Heißpressdruck HD kann dabei zwischen 0,5 N/mm² und 1,5 N/mm², vorzugsweise zwischen 0,8 N/mm² und 1,2 N/mm², betragen, wobei dieser für eine Presszeit von weniger als 20s, bevorzugt dabei von mehr als 8s, besonders bevorzugt zwischen 10 und 14s, noch mehr bevorzugt von 12s, angelegt wird.

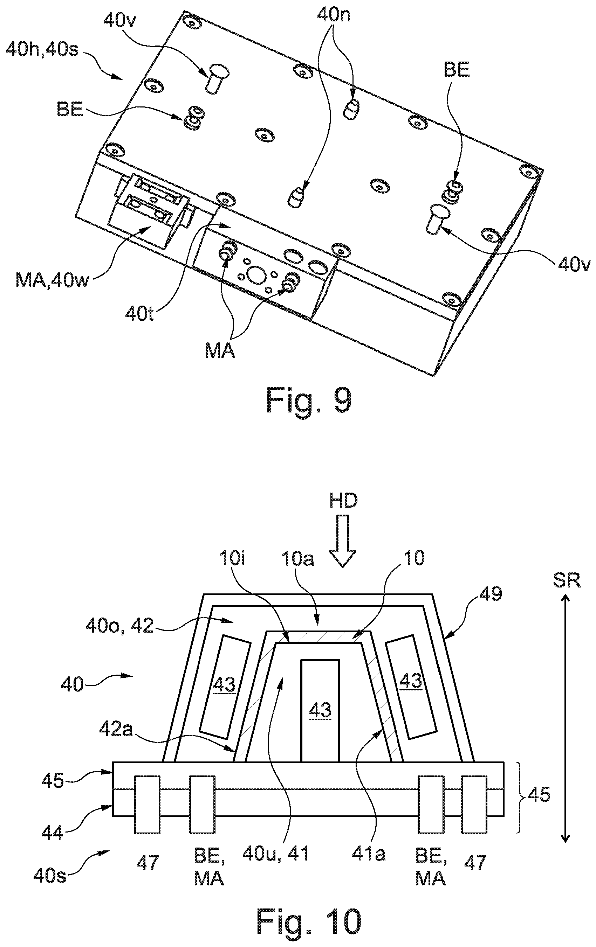

Fig.9 zeigt eine Ausführungsform einer Trägerplatte 45 für die Heißpress-Obereinheit als vierte Schnittstelle 40s zwischen Heißpressstation 40 und Heißpress-Obereinheit 40o. Die vierte Schnittstelle 40s ist hier durch eine zueinander kompatible mechanische Befestigungseinrichtung BE und zueinander kompatible Medienanschlüsse MA auf Seiten der Heißpress-Obereinheit 40o und auf Seiten einer entsprechenden Haltevorrichtung 40h der Heißpressstation 40, hier ausgeführt als Halteplatte, gebildet. Die Medienanschlüsse MA umfassen dabei Heiz- und/oder Druckgas- und Vakuumanschlüsse. Die die kompatiblen mechanischen Befestigungseinrichtung BE und die zueinander kompatiblen Medienanschlüsse MA sind als ein reversibles Schnellspannsystem, vorzugsweise ein Bajonettverschluss und/oder ineinander einrastende Steckverbindungen, ausgeführt. Hierbei besitzen die Haltevorrichtungen 40h auf ihren den jeweiligen Heißpress-Ober- und -Untereinheiten 40o, 40u zugewandten Seiten zumindest zwei definierte Werkzeugnullpunkte 40n zu einem positionsgenauen Aufsetzen der Heißpress-Obereinheit 40o und/oder Heißpress-Untereinheit 40u auf die jeweiligen Haltvorrichtungen 40h besitzen. Hierbei sind die Werkzeugnullpunkte 40n selbstzentrierend ausgeführt und umfassen eine Temperaturkompensation. Ferner ist die hier gezeigte Halteplatte 40h für die Heißpress-Obereinheit mit einer Absturzsicherung 40v gegen Lösung der Heißpress-Obereinheit 40o von der Halteplatte 40h in Form eines Stiftes mit einem den Absturz verhindernden breiteren Kopf ausgeführt, der bei der Montage in einem Schlitz der Trägerplatte 35 eingeführt wird und diese in eine vorgesehene Position gegenüber der Halteplatte 40h so verschoben wird, dass der Stift 40v nicht herausrutschen kann. Die Haltevorrichtung 40h umfasst des Weiteren senkrecht zur Schließrichtung SR für die Heißpressstation 40 eine Transportschnittstelle 40t, die zum automatischen Wechsel der Heißpress-Obereinheit 40o und/oder der Heißpress-Untereinheit 40u durch eine Bewegungseinheit 4 verwendet wird. Die Haltevorrichtungen 40h umfasst des Weiteren separat von der Transportschnittstelle 40t eine Heizstromschnittstelle 40w zur Übergabe eines Heizstroms an die Heißpress-Obereinheit 40o und/oder Heißpress-Untereinheit 40u.

Fig. 10 zeigt eine schematische Darstellung einer Ausführungsform des Heißpress-Unterwerkzeug 41 und Heißpress-Oberwerkzeug 42 der Heißpressstation 40 aus Fig.8 beim Heißpressen. Hierbei werden die jeweiligen dem Formteil 10 zugewandten Heißpressseiten 41a, 42a des Heißpress-Unterwerkzeugs 41 und des Heißpress-Oberwerkzeugs 42 mittels elektrischer Heizpatronen 43 beheizt. Hierbei sind die Heizpatronen 43 im Heißpress-Unterwerkzeug 41 und Heißpress-Oberwerkzeug 42 so ausgestaltet und angeordnet, dass die Heißpressseiten 41a, 42a auf Temperaturen größer 150°C, vorzugsweise zwischen 180°C und 250°C, aufgeheizt werden können. Hierbei können die Heizpatronen 43 so gesteuert werden, dass sich die Temperaturen von Heißpress-Unterwerkzeug 41 und Heißpress-Oberwerkzeug 42 unterscheiden, wobei das Heißpress-Oberwerkzeug 42 eine höhere Temperatur als das Heißpress-Unterwerkzeug 41 besitzen kann, vorzugsweise unterscheiden sich die Temperaturen um mindestens 25°C, vorzugsweise nicht mehr als 60°C, besonders bevorzugt um 50°C. Dafür sind die Heizpatronen 43 konturnah am Formteil 10 in den jeweiligen Heißpress-Oberwerkzeugen 42 und Heißpress-Unterwerkzeugen 41 angeordnet und die jeweiligen Heißpress-Oberwerkzeuge 42 und Heißpress-Unterwerkzeuge 41 sind aus Metall gefertigt. Hier ist eine Heizpatrone 43 zentral im inneren Werkzeug 40i parallel zur Schließrichtung SR mit einer ersten Heizleistung angeordnet ist, während im äußeren Werkzeug sechs Heizpatronen 43 mit zweiten Heizleistungen konzentrisch um die Schließrichtung SR herum parallel zur Heißpressseite 41a, 42a des inneren Werkzeugs 40i angeordnet, wobei die erste Heizleistung größer ist als die zweite Heizleistung. Des Weiteren umfassen hier die Heißpress-Oberwerkzeuge 42 auf den vom Formteil 10 abgewandten Seiten eine Umhüllung 49 aus einer thermisch isolierenden Material. Die vierte Schnittstelle 40s umfasst auf Seiten der Heißpress-Obereinheit 40o (hier nicht gezeigt) und der Heißpress-Untereinheit 40u jeweils eine Trägerplatte 45, auf der hier die Heißpress-Unterwerkzeuge 41 angeordnet sind. Gleiches würde auch für die Trägerplatte 45 der Heißpress-Obereinheit 40o für die Heißpress-Oberwerkzeuge 42 gelten. Die Trägerplatte 45 umfasst eine Wärmeisolationsschicht 44, um die jeweiligen Trägerplatten 45 gegen die Haltevorrichtung 40h thermisch zu isolieren. Zusätzlich sind in der Trägerplatte 45 zwischen der Wärmeisolationsschicht 44 und einer der Haltevorrichtung 40h zugewandten Seite der Trägerplatte 45 ein oder mehrere Dehnungsmittel 47 angeordnet, um eine Positionstreue der Trägerplatte 45 zur Haltevorrichtung 40h zu verbessern.

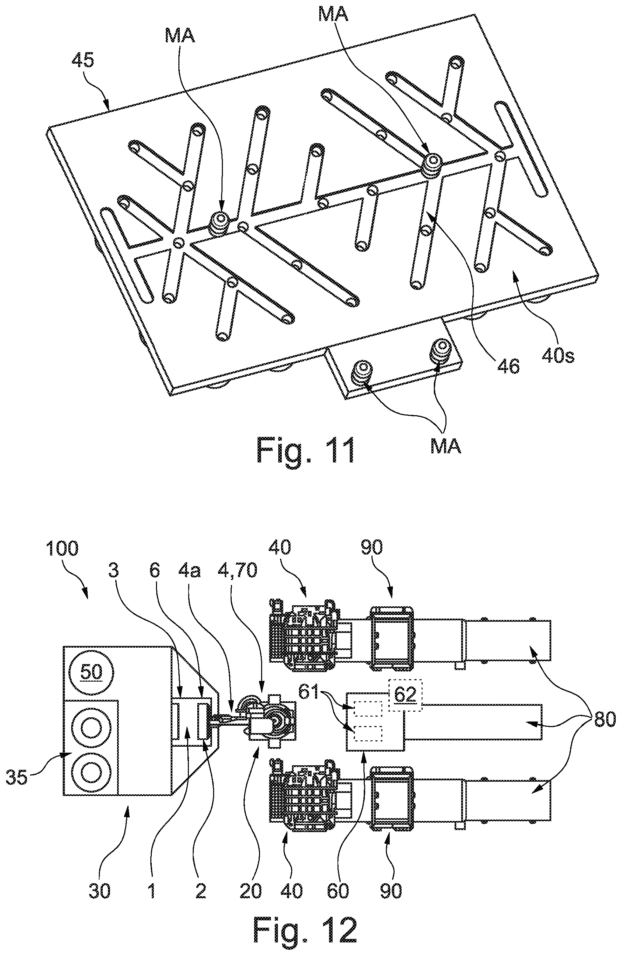

Fig.11 zeigt eine Trägerplatte 45 der Heißpress-Obereinheit 40o umfassend ein Gasleitungssystem 46, um in den jeweiligen Heißpress-Oberwerkzeugen 42 je nach Prozessschritt einen Unterdruck zum Halten der Formteile 10 in und/oder einen Überdruck zum Ausgeben der endgeformten Formteile 10 aus den Heißpress-Oberwerkzeugen 42 anzulegen. Das Gasleitungssystem 46 verästelt sich in der Trägerplatte 45 lateral von zumindest einem Medienanschluss MA der vierten Schnittstelle 40s zu allen Positionen der Heißpress-Oberwerkzeuge 42 und wird in Schließrichtung SR der Heißpressstation 40 vertikal zur Trägerplatte 45 den Heißpress-Oberwerkzeugen 42 zugeführt. Für die Trägerplatte 45 der Heißpress-Untereinheit 40u gilt entsprechendes.

Fig.12 zeigt eine Ausführungsform der erfindungsgemäßen Faserformanlage 100 zur Herstellung von Formteilen 10 aus umweltverträglich abbaubarem Fasermaterial 11 umfassend ein Reservoir 6 zur Bereitstellung einer Pulpe 1 als flüssige Lösung mit umweltverträglich abbaubarem Fasermaterial 11 als Teil der Vorformstation 30. In einer Anformstation 20 taucht eine Bewegungseinheit 4 ein an ihr angebrachtes Saugwerkzeug 2 mit einem Saugkopf 21 mit einer dreidimensional geformten Saugkopf-Saugseite 21s, die mit ihrer Form an eine Kontur des späteren Formteils 10 angepasst ist, in die Pulpe 1 ein. Die Pulpe 1 wird dabei durch eine Pulpeaufbereitungs- und Nachlieferungseinheit 35 bereitgestellt und während des Betriebs kontinuierlich erneuert und nachgeliefert. Die Bewegungseinheit 4 ist hier als Roboter mit einem im Raum frei beweglichen Roboterarm 4a ausgeführt. Ein Roboter 4 kann auf engem Raum präzise und reproduzierbare Bewegungen durchführen und eignet sich daher besonders für die Führung des Saugwerkzeugs 2 zwischen Pulpe-Reservoir 6 und Vorpresseinheit 3 der Vorformstation 30. Das Saugwerkzeug 2 ist dabei über eine Schnittstelle 4s mit dem Roboterarm 4a verbunden. Eine solche Schnittstelle 4s lässt einen schnellen Wechsel des Saugwerkzeugs 2 bei Bedarf zu. Das Saugwerkzeug 2 ist dazu ausgestaltet, das Formteil 10 mittels Ansaugen des umweltverträglich abbaubaren Fasermaterials 11 auf die Saugkopf-Saugseite 21s mittels Saugdruck SD (Unterdruck) im Saugwerkzeug 2 anzuformen. Die Vorpresseinheit 3 ist zum Vorpressen des angeformten Formteils 10 mit einem Vorpressdruck VD zur Reduzierung eines Anteils der flüssigen Lösung im Formteil 10 und zu dessen Formstabilisation vorgesehen. Die Heißpressstation 40 mit hier sichtbarem Heißpress-Unterwerkzeug 41 ausgefahren zur Übernahme der vorgeformten Formteile 10 vom Saugwerkzeug 2 dargestellt, ist zum Heißpressen des vorgepressten Formteils 10 mit einem Heißpressdruck HD und damit zur Endformung des Formteils 10 und zur weiteren Reduzierung des Anteils der flüssigen Lösung im Formteil 10 vorgesehen. Zur Steuerung der Faserformanlage 100 umfasst diese eine Steuereinheit 50, die mit den anderen Komponenten 20, 30, 35, 40, 60, 70, 80, 90 der Faserformanlage 100 auf geeignete Weise verbunden ist, um diese Komponenten. Insbesondere kann die Faserformanlage 100 eine Beschichtungseinheit 90 zum Aufbringen einer oder mehrerer funktionaler Schichten auf das Formteil 10 umfassen. Hierbei ist die Faserformanlage 100 dazu ausgestaltet, einen automatischen Wechsel von Werkzeugen aus der Anformstation 20, Vorformstation 30 und/oder Heißpressstation 40 zu ermöglichen. Die Faserformanlage 100 umfasst dazu zumindest eine Werkzeugwechselstation 60, in der zumindest ein Werkzeug 2, 3, 40o, 40u der Gruppe der Werkzeuge umfassend das Saugwerkzeug 2, die Vorpresseinheit 3, die Heißpress-Obereinheit 40o und/oder die Heißpress-Untereinheit 40u für einen automatischen Werkzeugwechsel gegen ein jeweiliges anderes Werkzeug 2, 3, 40o, 40u in der Faserformanlage 100 positioniert werden kann. Die Werkzeugwechselstation 60 umfasst dazu eine Mehrzahl an Werkzeugwechselpositionen 61, die an die Form des jeweiligen Werkzeugs 2, 3, 40o, 40u angepasst sind. Die Werkzeugwechselstation 60 umfasst des Weiteren ein Transportband 80 für die zu wechselnden Werkzeuge 2, 3, 40o, 40u, das dazu ausgestaltet ist, die zu wechselnden Werkzeuge 2, 3, 40o, 40u an die jeweiligen Werkzeugwechselpositionen 61 zu transportieren bzw. das gewechselte Werkzeug 2, 3, 40o, 40u aus den Werkzeugwechselpositionen 61 wieder abzutransportieren. Hierzu umfasst die Werkzeugwechselstation 60 eine Bewegungseinheit 62, vorzugsweise ein Roboter mit Greifarm, um die mit dem Transportband 80 bereitgestellten Werkzeuge 2, 3, 40o, 40u in die gewünschten Werkzeugwechselpositionen 61 zu setzen. Vorzugsweise erkennt die Bewegungseinheit 62 die Werkzeuge und die dafür vorgesehenen Werkzeugpositionen 61, beispielsweise mittels eines Identifikationskodierung am jeweiligen Werkzeug. Die dem Werkzeug zugeordneten Werkzeugpositionen 61 können ebenfalls kodiert sein oder sind in einer Tabelle in der Steuerung der Bewegungseinheit 62 zur Ausführung abgelegt. Die Werkzeugwechselstation 60 kann als Alternative zum Transportband 80 eine als Roboter ausgeführte Bewegungseinheit 62 für die zu wechselnden Werkzeuge 2, 3, 40o, 40u umfassen, die dazu ausgestaltet ist, die zu wechselnden Werkzeuge 2, 3, 40o, 40u an die jeweiligen Werkzeugwechselpositionen 61 zu transportieren bzw. das gewechselte Werkzeug 2, 3, 40o, 40u aus den Werkzeugwechselpositionen 61 wieder abzutransportieren. Vorzugsweise sind, wie hier gezeigt, die Bewegungseinheit 4 der Anformstation 20, die Vorformstation 30, die Heißpressstation 40 und die Werkzeugwechselstation 60 so zueinander positioniert, dass die Bewegungseinheit 4 der Anformstation 20 in einer zusätzlichen Funktion als Wechseleinheit 70 die Werkzeuge 2, 3, 40o, 40u dieser Stationen 20, 30, 40 automatisch in der Werkzeugwechselstation 60 ablegt und entnimmt, wobei zumindest jeweilige Transportschnittstellen 32s, 40t der Vorformstation 20 und/oder der Heißpressstation 40 so konfiguriert sind, dass sie kompatibel zu der ersten Schnittstelle 4s der Bewegungseinheit 4 als Wechseleinheit 70 ausgeführt sind.

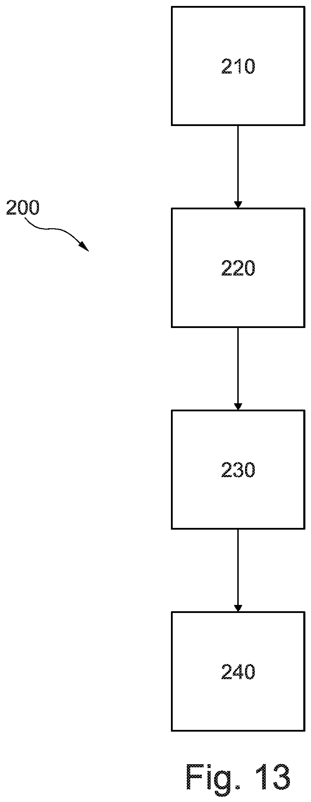

Fig.13 zeigt eine schematische Darstellung einer Ausführungsform des erfindungsgemäßen Verfahrens 200 zum automatischen Wechsel von Werkzeugen in einer erfindungsgemäßen Faserformanlage 100 umfassend nachfolgende Schritte des Bereitstellens 210 eines auszuwechselnden Werkzeugs 2, 3, 40o, 40u in einer Wechselstation 60 in einer ersten Wechselposition 61; des Ablegens 220 des ausgewechselten Werkzeugs 2, 3, 40o, 40u in der Wechselstation 60 in einer zweiten Wechselposition 61; des Herausnehmens 230 des auszuwechselnden Werkzeugs 2, 3, 40o, 40u aus der ersten Wechselposition 61 und Einsetzen dieses Werkzeugs 2, 3, 40o, 40u je nach Werkzeug 2, 3, 40o, 40u in eine erfindungsgemäße Anformstation 20, eine erfindungsgemäße Vorformstation 30 und eine erfindungsgemäße Heißpressstation 40; und des Abtransports des ausgewechselten Werkzeugs 2, 3, 40o, 40u aus der zweiten Wechselposition 61 aus der Wechselstation 60.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um auch erläuterte Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung der vorliegenden Erfindung handelt. Insofern beschränkt sich die Ausgestaltung der Erfindung nicht auf dieses Ausführungsbeispiel.

### Liste der verwendeten Bezugszeichen

- 1: Pulpe
- 11: umweltverträgliches abbaubares Fasermaterial
- 2: Saugwerkzeug
- 21: Saugkopf
- 21a: Saugkopf-Außenseite
- 21i: Saugkopf-Innenseite
- 21p: der Pulpe zugewandten Stirnseite des Saugkopfes
- 21s: Saugkopf-Saugseite
- 22: poröses Sieb des Saugkopfes
- 22p: der Pulpe zugewandten Seite (Pulpen-Seite) des Siebes
- 22s: Seite des Siebes zugewandt zur saugseitigen Oberfläche 23s
- 23: Saugkanäle im Saugkopf
- 23s: Saugseitige Oberfläche des Saugkopfes
- 24: Steckverbindungen zur Befestigung der Saugköpfe / Module auf der Basisplatte
- 25: Abführkanal für die flüssige Lösung
- 26: Basisplatte des Saugwerkzeugs
- 26s: zweite Schnittstelle
- 27: Gasleitungssystem in der Basisplatte
- 28: reversibles Befestigungsmittel für das Sieb, z.B. Klemmmittel
- 29: Module mit Saugköpfen
- 3: Vorpresseinheit
- 3s: dritte Schnittstelle
- 31: Vorpress-Unterwerkzeug
- 31a: Pressfläche des Vorpress-Unterwerkzeugs
- 32: Trägerplatte
- 32s: Transportschnittstelle der Trägerplatte 32
- 33: Hohlraum im Vorpress-Unterwerkzeug
- 34: Wand als Pressfläche des Vorpress-Unterwerkzeugs
- 36: Heizelement der Trägerplatte 32
- 4: Bewegungseinheit
- 4a: frei im Raum beweglicher Roboterarm
- 4s: erste Schnittstelle
- 41: Heißpress-Unterwerkzeug der Heißpressstation
- 41a: Heißpressseite des Heißpress-Unterwerkzeugs, z.B. die Außenseite
- 42: Heißpress-Oberwerkzeug der Heißpressstation
- 42a: Heißpressseite des Heißpress-Oberwerkzeugs, z.B. die Innenseite
- 43: Heizpatronen
- 44: Wärmeisolationsschicht
- 45: Trägerplatten für die jeweiligen Heißpress-Unterwerkzeug und Heißpress-Oberwerkzeug ausgeführt als Multiwerkzeug
- 46: Gasleitungssystem in der Trägerplatte 45
- 47: Dehnungsmittel
- 48: Schienen zum seitlichen Verfahren der Heißpress-Ober- und -Untereinheiten
- 49: Umhüllung aus einem thermisch isolierenden Material
- 6: Reservoir an Pulpe
- 10: Formteil aus umweltverträglichem abbaubarem Fasermaterial
- 10a: Innenkontur (Innenseite) des Formteils
- 10i: Außenkontur (Außenseite) des Formteils

- 20: Anformstation
- 30: Vorformstation
- 35: Pulpeaufbereitungs- und Nachlieferungseinheit
- 40: Heißpressstation
- 40u: Heißpress-Untereinheit
- 40o: Heißpress-Obereinheit
- 40h: Haltevorrichtung der Heißpressstation für die Heißpress-Untereinheit bzw. die Heißpress-Obereinheit
- 40s: vierte Schnittstelle zwischen Heißpress-Untereinheit bzw. Heißpress-Obereinheit zur Heißpressstation
- 40t: Transportschnittstelle
- 40n: Werkzeugnullpunkt
- 40v: Absturzsicherung für die Heißpress-Obereinheit
- 40w: Heizstromschnittstelle
- 50: Steuereinheit
- 60: Werkzeugwechselstation
- 61: Werkzeugwechselposition
- 62: Bewegungseinheit der Wechselstation
- 70: Wechseleinheit
- 80: Transportband
- 90: weitere Komponenten der Faserformanlage, z.B. Beschichtungsstation
- 100: Faserformanlage

- 200: Verfahren zum automatischen Wechsel von Werkzeugen in einer Faserformanlage
- 210: Bereitstellen eines auszuwechselnden Werkzeugs in einer Wechselstation
- 220: Ablegen des ausgewechselten Werkzeugs in der Wechselstation
- 230: Herausnehmen des auszuwechselnden Werkzeugs aus der Wechselstation und Einsetzen dieses Werkzeugs je nach Werkzeug in eine der Stationen der Faserformanlage
- 240: Abtransport des ausgewechselten Werkzeugs aus der Wechselstation

- A-B: Schnittlinie in Figur 4
- BE: Befestigungseinrichtung
- GD: Gasdruck
- HD: Heißpressdruck
- MA: zueinander kompatible Medienanschlüsse
- SD: Saugdruck (Pulpe gegen Saugkopf)
- SR: Schließrichtung (Pressrichtung) der Heißpressstation
- VD: Vorpressdruck

## Patentansprüche

1. Eine Faserformanlage (100) umfassend zumindest
eine Anformstation (20) zum Anformen eines Formteils (10) aus umweltverträglich abbaubarem Fasermaterial (11) in einem Faserformprozess umfassend
- ein Saugwerkzeug (2) umfassend mehrere Saugköpfe (21) mit jeweils einer dreidimensional geformten Saugkopf-Saugseite (21s) zum Ansaugen des umweltverträglich abbaubaren Fasermaterials (11) mittels Unterdruck als Saugdruck (SD) aus einem Reservoir (6) mit einer Pulpe (1) als flüssige Lösung umfassend das umweltverträglich abbaubare Fasermaterial (11) zum Anformen des Formteils (10); und
- eine Bewegungseinheit (4) zum zumindest partiellen Eintauchen des Saugwerkzeugs (2) in die Pulpe (1), auf der das Saugwerkzeug (2) über eine erste Schnittstelle (4s) geeignet zu einem automatischen Wechsel des Saugwerkzeugs (2) reversibel montiert ist,
eine Vorformstation (30) zum Vorformen eines Formteils (10) aus umweltverträglich abbaubarem Fasermaterial (11) in einem Faserformprozess umfassend eine Vorpresseinheit (3) zur Ausübung eines Vorpressdrucks (VD) auf das mittels der Anformstation (20) angeformte Formteil (10) zur Reduzierung eines Anteils der flüssigen Lösung im Formteil (10) und zur Formstabilisierung des Formteils (10), wobei die Vorpresseinheit (3) als Multiwerkzeug mit einer Vielzahl an Vorpress-Unterwerkzeugen (31) angepasst auf das Saugwerkzeug (2) ausgeführt ist, wobei die Vorpresseinheit (3) mit der Vorformstation (30) über eine dritte Schnittstelle (3s) geeignet zu einem automatischen Wechsel der Vorpresseinheit (3) reversibel montiert ist, und
eine Heißpressstation (40) zum Endformen eines Formteils (10) aus umweltverträglich abbaubarem Fasermaterial (11) in einem Faserformprozess umfassend ein Heißpress-Untereinheit (40u) als Multiwerkzeug mit einer Vielzahl an Heißpress-Unterwerkzeugen (41) jeweils angepasst an eine Kontur des Formteils (10) zu dessen Aufnahme durch die jeweiligen Heißpress-Unterwerkzeuge (41) und eine Heißpress-Obereinheit (40o) als Multiwerkzeug mit einer Vielzahl entsprechend an das Formteil (10) angepassten Heißpress-Oberwerkzeugen (42) zum Auf- oder Einsetzen auf oder in das Formteil (10) entlang einer Schließrichtung (SR) für die Heißpressstation (40), wobei die Heißpress-Untereinheit (40u) und/oder die Heißpress-Obereinheit (40o) zur Ausübung eines Heißpressdrucks (HD) auf die beim Heißpressen zwischen den jeweiligen Heißpress-Unterwerkzeugen (41) und Heißpress-Oberwerkzeugen (42) angeordneten Formteilen (10) vorgesehen sind, wobei die Heißpress-Obereinheit (40o) und die Heißpress-Untereinheit (40u) mit der Heißpressstation (40) über jeweils vierte Schnittstellen (40s) geeignet zu einem automatischen Wechsel der Heißpress-Obereinheit (40o) und/oder der Heißpress-Untereinheit (40u) reversibel
montiert sind, wobei die Faserformanlage (100) dazu ausgestaltet ist, einen automatischen Wechsel von Werkzeugen (2, 3, 40o, 40u) aus der Anformstation (20), Vorformstation (30) und/oder Heißpressstation (40) zu ermöglichen, **dadurch gekennzeichnet,**
**dass** die Faserformanlage (100) zumindest eine Werkzeugwechselstation (60) umfasst, in der zumindest ein Werkzeug (2, 3, 40o, 40u) der Gruppe der Werkzeuge umfassend das Saugwerkzeug (2), die Vorpresseinheit (3), die Heißpress-Obereinheit (40o) und/oder die Heißpress-Untereinheit (40u) für einen automatischen Werkzeugwechsel gegen das jeweilige andere Werkzeug (2, 3, 40o, 40u) in der Faserformanlage (100) positioniert werden kann.

2. Die Faserformanlage (100) nach Anspruch 1,
**dadurch gekennzeichnet,**
**dass** die Werkzeugwechselstation (60) eine Mehrzahl an Werkzeugwechselpositionen (61) umfasst, die an die Form des jeweiligen Werkzeugs (2, 3, 40o, 40u) angepasst sind.

3. Die Faserformanlage (100) nach Anspruch 2,
**dadurch gekennzeichnet,**
**dass** die Werkzeugwechselstation (60) ein Transportband (80) für die zu wechselnden Werkzeuge (2, 3, 40o, 40u) umfasst, das dazu ausgestaltet ist, die zu wechselnden Werkzeuge (2, 3, 40o, 40u) an die jeweiligen Werkzeugwechselpositionen (61) zu transportieren bzw. das gewechselte Werkzeug (2, 3, 40o, 40u) aus den Werkzeugwechselpositionen (61) wieder abzutransportieren.

4. Die Faserformanlage (100) nach Anspruch 3,
**dadurch gekennzeichnet,**
**dass** die Werkzeugwechselstation (60) eine Bewegungseinheit (62), vorzugsweise einen Roboter mit Greifarm, umfasst, um die mit dem Transportband (80) bereitgestellten Werkzeuge (2, 3, 40o, 40u) in die gewünschten Werkzeugwechselpositionen (61) zu setzen.

5. Die Faserformanlage (100) nach Anspruch 4,
**dadurch gekennzeichnet,**
**dass** die Werkzeugwechselstation (60) eine als Roboter ausgeführte Bewegungseinheit (62) für die zu wechselnden Werkzeuge (2, 3, 40o, 40u) umfasst, die dazu ausgestaltet ist, die zu wechselnden Werkzeuge (2, 3, 40o, 40u) an die jeweiligen Werkzeugwechselpositionen (61) zu transportieren bzw. das gewechselte Werkzeug (2, 3, 40o, 40u) aus den Werkzeugwechselpositionen (61) wieder abzutransportieren.

6. Die Faserformanlage (100) nach einem der Ansprüche 1 bis 5,
**dadurch gekennzeichnet,**
**dass** die Bewegungseinheit (4) der Anformstation (20), die Vorformstation (30), die Heißpressstation (40) und die Werkzeugwechselstation (60) so zueinander positioniert sind, dass die Bewegungseinheit (4) der Anformstation (20) in Funktion als Wechseleinheit (70) die Werkzeuge (2, 3, 40o, 40u) dieser Stationen (20, 30, 40) automatisch in der Werkzeugwechselstation (60) ablegen und entnehmen kann, wobei zumindest jeweilige Transportschnittstellen (32s, 40t) der Vorformstation (20) und/oder der Heißpressstation (40) so konfiguriert sind, dass sie kompatibel zu der ersten Schnittstelle (4s) der Bewegungseinheit (4) als Wechseleinheit (70) ausgeführt sind.

7. Die Faserformanlage (100) nach einem der Ansprüche 1 bis 6,
**dadurch gekennzeichnet,**
**dass** die Faserformanlage (100) eine Steuereinheit (50) zur Steuerung zumindest der Anformstation (20), der Vorformstation (30), der Heißpressstation (40), der Wechselstation (60) sowie weiterer Komponenten (70) umfasst.

8. Die Faserformanlage (100) nach einem der Ansprüche 1 bis 7,
**dadurch gekennzeichnet,**
**dass** die erste Schnittstelle (4s) durch zueinander kompatible Medienanschlüsse (MA), vorzugsweise Unterdruck- und/oder Überdruckanschlüsse, und zueinander kompatible mechanische Befestigungseinrichtungen (BE) auf Seiten der Bewegungseinheit (4) und des Saugwerkzeugs (2) gebildet ist, und/oder
**dass** die dritte Schnittstelle (3s) durch zueinander kompatible mechanische Befestigungseinrichtungen (BE) auf Seiten der Vorpresseinheit (3) und auf Seiten der Vorformstation (30) gebildet ist, vorzugsweise zusätzlich durch zueinander kompatible Medienanschlüsse (MA), besonders bevorzugt umfassen die Medienanschlüsse (MA) Heiz- und/oder Druckgasanschlüsse, und/oder
**dass** die vierte Schnittstelle (40s) durch eine zueinander kompatible mechanische Befestigungseinrichtung (BE) und zueinander kompatible Medienanschlüsse (MA) auf Seiten der Heißpress-Obereinheit (40o) und/oder Heißpress-Untereinheit (40u) und auf Seiten einer entsprechenden Haltevorrichtung (40h), vorzugsweise ausgeführt als Halteplatte, der Heißpressstation (40) gebildet ist, besonders bevorzugt umfassen die Medienanschlüsse (MA) neben Heiz- auch Druckgas- und Vakuumanschlüsse.

9. Die Faserformanlage (100) nach Anspruch 8,
**dadurch gekennzeichnet,**
**dass** die zueinander kompatiblen Medienanschlüsse (MA) und/oder die kompatiblen mechanischen Befestigungseinrichtungen (BE) reversible Schnellverschlusseinrichtungen, vorzugsweise ein Bajonettverschluss und/oder ineinander einrastende Steckverbindungen, sind, und/oder
**dass** die kompatiblen mechanischen Befestigungseinrichtungen (BE), vorzugsweise auch die zueinander kompatiblen Medienanschlüsse (MA), ein reversibles Schnellspannsystem, vorzugsweise ein Bajonettverschluss und/oder ineinander einrastende Steckverbindungen, sind, und/oder
**dass** die zueinander kompatiblen mechanischen Befestigungseinrichtungen (BE) und zueinander kompatiblen Medienanschlüsse (MA) ein reversibles Schnellspannsystem, vorzugsweise ein Bajonettverschluss und/oder ineinander einrastende Steckverbindungen, sind.

10. Die Faserformanlage (100) nach einem der Ansprüche 1 bis 9,
**dadurch gekennzeichnet,**
**dass** das Saugwerkzeug (2) eine Basisplatte (26) mit darauf montierten Saugköpfe (21) und ein Gasleitungssystem (27) in der Basisplatte (26) umfasst, das zumindest den Unterdruck bereitgestellt über die erste Schnittstelle (4s) an die Saugköpfe (21) als den Saugdruck (SD) zum Ansaugen des Fasermaterials (11) verteilt.

11. Die Faserformanlage (100) nach Anspruch 10,
**dadurch gekennzeichnet,**
**dass** die Basisplatte (26) eine zweite Schnittstelle (26s) mit zu den einzelnen Saugköpfen (21) kompatiblen Medienanschlüssen (MA) und kompatiblen mechanischen Befestigungseinrichtungen (BE) bildet, damit einzelne oder alle Saugköpfe (21) reversibel mit der Basisplatte (26) verbunden werden können.

12. Die Faserformanlage (100) nach Anspruch einem der Ansprüche 1 bis 11,
**dadurch gekennzeichnet,**
**dass** die dritte Schnittstelle (3s) auf Seiten der Vorpresseinheit (3) eine Trägerplatte (32) umfasst, auf der die Vorpress-Unterwerkzeuge (31) angeordnet sind.

13. Die Faserformanlage (100) nach Anspruch 12,
**dadurch gekennzeichnet,**
**dass** die Trägerplatte (32) eine Transportschnittstelle (32s) zum automatischen Wechsel der Vorpresseinheit (3) durch eine Bewegungseinheit (4), vorzugsweise die Bewegungseinheit (4) der Anformstation (20), umfasst.

14. Die Faserformanlage (100) nach einem der Ansprüche 8 bis 13,
**dadurch gekennzeichnet,**
**dass** die Haltevorrichtungen (40h) auf ihren den jeweiligen Heißpress-Ober- und - Untereinheiten (40o, 40u) zugewandten Seiten zumindest zwei definierte Werkzeugnullpunkte (40n) zu einem positionsgenauen Aufsetzen der Heißpress-Obereinheit (40o) und/oder Heißpress-Untereinheit (40u) auf die jeweiligen Haltvorrichtungen (40h) umfassen.

15. Die Faserformanlage (100) nach Anspruch 14,
**dadurch gekennzeichnet,**
**dass** die Werkzeugnullpunkte (40n) selbstzentrierend ausgeführt sind und eine Temperaturkompensation umfassen.

16. Die Faserformanlage (100) nach einem der Ansprüche 8 bis 15,
**dadurch gekennzeichnet,**
**dass** die Haltevorrichtung (40h) der Heißpressstation (40) für die Heißpress-Obereinheit (40o) eine Absturzsicherung (40v) gegen Lösung der Heißpress-Obereinheit (40o) von der Halteplatte (40h) umfasst.

17. Die Faserformanlage (100) nach einem der Ansprüche 8 bis 16,
**dadurch gekennzeichnet,**
**dass** die Haltevorrichtung (40h) eine zusätzliche Transportschnittstelle (40t) zum automatischen Wechsel der Heißpress-Obereinheit (40o) und/oder der Heißpress-Untereinheit (40u) durch eine Bewegungseinheit (4), vorzugsweise die Bewegungseinheit (4) der Anformstation (20), umfasst, vorzugsweise umfasst die Transportschnittstelle (40t) Druckgas- und Vakuumanschlüsse.

18. Die Faserformanlage (100) nach einem der Ansprüche 1 bis 17,
**dadurch gekennzeichnet,**
**dass** die vierte Schnittstelle (40s) auf Seiten der Heißpress-Obereinheit (40o) und der Heißpress-Untereinheit (40u) jeweils eine Trägerplatte (45) umfasst, auf der die Heißpress-Unterwerkzeuge (41) bzw. Heißpress-Oberwerkzeuge (42) angeordnet sind.

19. Die Faserformanlage (100) nach Anspruch 18,
**dadurch gekennzeichnet,**
**dass** die jeweiligen Trägerplatten (45) eine Wärmeisolationsschicht (44) umfassen, um die jeweiligen Trägerplatten (45) gegen die Haltevorrichtung (40h) thermisch zu isolieren, und/oder
**dass** in der Trägerplatte (45) zwischen der Wärmeisolationsschicht (44) und einer der Haltevorrichtung (40h) zugewandten Seite der Trägerplatte (45) ein oder mehrere Dehnungsmittel (47) angeordnet sind, um eine Positionstreue der Trägerplatte (45) zur Haltevorrichtung (40h) zu verbessern.

20. Die Faserformanlage (100) nach einem der Ansprüche 1 bis 19,
**dadurch gekennzeichnet,**
**dass** die Heißpress-Obereinheit (40o) und die Heißpress-Untereinheit (40u) jeweils in der Heißpressstation (40) seitlich verfahrbar gelagert sind, um einen Werkzeugwechsel der jeweiligen Heißpress-Untereinheit (40u) und Heißpress-Obereinheit (40o) außerhalb eines Prozessraums der Heißpressstation (40) zu ermöglichen.

21. Ein Verfahren (200) zum automatischen Wechsel von Werkzeugen in einer Faserformanlage (100) nach einem der Ansprüche 1 bis 20 umfassend nachfolgende Schritte:
- Bereitstellen (210) eines auszuwechselnden Werkzeugs (2, 3, 40o, 40u) in der Werkzeugwechselstation (60) in einer ersten Wechselposition (61);
- Ablegen (220) des ausgewechselten Werkzeugs (2, 3, 40o, 40u) in der Werkzeugwechselstation (60) in einer zweiten Wechselposition (61);
- Herausnehmen (230) des auszuwechselnden Werkzeugs (2, 3, 40o, 40u) aus der ersten Wechselposition (61) und Einsetzen dieses Werkzeugs (2, 3, 40o, 40u) je nach Werkzeug (2, 3, 40o, 40u) in die Anformstation (20), in die Vorformstation (30) oder in die Heißpressstation (40); und
- Abtransport (240) des ausgewechselten Werkzeugs (2, 3, 40o, 40u) aus der zweiten Wechselposition (61) aus der Werkzeugwechselstation (60).

## Claims

1. A fiber molding machine (100) comprising at least
a molding station (20) for molding a molded part (10) from sustainable, degradable fiber material (11) in a fiber molding process comprising
- a suction tool (2) comprising a plurality of suction heads (21) each having a three-dimensionally shaped suction head/suction side (21s) for suctioning the sustainable, degradable fiber material (11) by means of negative pressure as suction pressure (SD) from a reservoir (6) having a pulp (1) as a liquid solution comprising the sustainable, degradable fiber material (11) for molding the molded part (10); and
- a motion unit (4) for at least partial immersion of the suction tool (2) in the pulp (1), on which the suction tool (2) is reversibly mounted via a first interface (4s) suitable for an automatic change of the suction tool (2),
a pre-molding station (30) for pre-molding a molded part (10) from sustainable, degradable fiber material (11) in a fiber molding process, comprising a pre-pressing unit (3) for exerting a pre-pressing pressure (VD) on the molded part (10) molded by means of the molding station (20) in order to reduce the proportion of liquid solution in the molded part (10) and to stabilize the shape of the molded part (10), wherein the pre-pressing unit (3) is designed as a multi-tool with a plurality of lower pre-pressing tools (31) adapted to the suction tool (2), wherein the pre-pressing unit (3) is reversibly mounted with the pre-molding station (30) via a third interface (3s) suitable for an automatic change of the pre-pressing unit (3), and
a hot-pressing station (40) for final molding of a molded part (10) from sustainable, degradable fiber material (11) in a fiber molding process, comprising a lower hot-pressing unit (40u) as a multi-tool with a plurality of lower hot-pressing tools (41) each adapted to a contour of the molded part (10) for receiving it via the respective lower hot-pressing tools (41) and an upper hot-pressing unit (40o) as a multi-tool with a plurality of upper hot-pressing tools (42) correspondingly adapted to the molded part (10) for mounting on or inserting into the molded part (10) along a closing direction (SR) for the hot-pressing station (40), the lower hot-pressing unit (40u) and/or the upper hot-pressing unit (40o) being provided for exerting a hot-pressing pressure (HD) on the molded parts (10) arranged between the respective lower hot-pressing tools (41) and upper hot-pressing tools (42) during hot pressing, wherein the upper hot-pressing unit (40o) and the lower hot-pressing unit (40u) are reversibly mounted with the hot-pressing station (40) via respective fourth interfaces (40s) suitable for an automatic exchange of the upper hot-pressing unit (40o) and/or the lower hot-pressing unit (40u), wherein the fiber molding machine(100) is configured to enable an automatic change of tools (2, 3, 40o, 40u) from the molding station (20), pre-molding station (30) and/or hot-pressing station (40), **characterized in that**
the fiber molding machine (100) comprises at least a tool changing station (60) in which at least a tool (2, 3, 40o, 40u) of the group of tools comprising the suction tool (2), the pre-pressing unit (3), the upper hot-pressing unit (40o) and/or the lower hot-pressing unit (40u) can be positioned against the respective other tool (2, 3, 40o, 40u) in the fiber molding machine (100) for an automatic tool change.

2. The fiber molding machine (100) according to claim 1,
**characterized in that**
the tool changing station (60) comprises a plurality of tool changing positions (61) which are adapted to the shape of the respective tool (2, 3, 40o, 40u).

3. The fiber molding machine (100) according to claim 2,
**characterized in that**
the tool changing station (60) comprises a conveyor belt (80) for the tools (2, 3, 40o, 40u) to be changed, which is configured to transport the tools (2, 3, 40o, 40u) to be changed to the respective tool changing positions (61) or to transport the changed tool (2, 3, 40o, 40u) away again from the tool changing positions (61).

4. The fiber molding machine (100) according to claim 3,
**characterized in that**
the tool changing station (60) comprises a motion unit (62), preferably a robot having a gripper arm, in order to place the tools (2, 3, 40o, 40u) provided via the conveyor belt (80) in the desired tool changing positions (61).

5. The fiber molding machine (100) according to claim 4,
**characterized in that**
the tool changing station (60) comprises a motion unit (62) designed as a robot, for the tools (2, 3, 40o, 40u) to be changed, which is configured to transport the tools (2, 3, 40o, 40u) to be changed to the respective tool changing positions (61) or to transport the changed tool (2, 3, 40o, 40u) away again from the tool changing positions (61)

6. The fiber molding machine (100) according to any of the claims 1 to 5,
**characterized in that**
the motion unit (4) of the molding station (20), the pre-molding station (30), the hot-pressing station (40) and the tool changing station (60) are positioned relative to one another in such a way that the motion unit (4) of the molding station (20), functioning as an exchange unit (70), can automatically deposit and remove the tools (2, 3, 40o, 40u) of these stations (20, 30, 40) in the tool changing station (60), wherein at least respective transport interfaces (32s, 40t) of the pre-molding station (20) and/or the hot-pressing station (40) are configured such that they are designed to be compatible with the first interface (4s) of the motion unit (4) as an exchange unit (70).

7. The fiber molding machine (100) according to any of the claims 1 to 6,
**characterized in that**
the fiber molding machine (100) comprises a control unit (50) for controlling at least the molding station (20), the pre-molding station (30), the hot-pressing station (40), the tool changing station (60) and further components (70).

8. The fiber molding machine (100) according to any of the claims 1 to 7,
**characterized in that**
the first interface (4s) is formed by mutually compatible media connections (MA), preferably negative pressure and/or positive pressure connections, and mutually compatible mechanical fastening devices (BE) on the sides of the motion unit (4) and the suction tool (2), and/or
**in that** the third interface (3s) is formed by mutually compatible mechanical fastening devices (BE) on the side of the pre-pressing unit (3) and on the side of the pre-molding station (30), preferably also by mutually compatible media connections (MA), particularly preferably the media connections (MA) comprise heating and/or compressed gas connections, and/or
**in that** the fourth interface (40s) is formed by a mutually compatible mechanical fastening device (BE) and mutually compatible media connections (MA) on the side of the upper hot-pressing unit (40o) and/or lower hot-pressing unit (40u) and on the side of a corresponding holding device (40h), preferably designed as a holding plate of the hot-pressing station (40), particularly preferably the media connections (MA) also comprise compressed gas and vacuum connections in addition to heating connections.

9. The fiber molding machine (100) according to claim 8,
**characterized in that**
the mutually compatible media connections (MA) and/or the compatible mechanical fastening devices (BE) are reversible quick-release fastening devices, preferably a bayonet lock and/or interlocking plug connections, and/or
that the compatible mechanical fastening devices (BE), preferably also the mutually compatible media connections (MA), are a reversible quick-release system, preferably a bayonet lock and/or interlocking plug connections, and/or
that the mutually compatible mechanical fastening devices (BE) and mutually compatible media connections (MA) are a reversible quick-release system, preferably a bayonet lock and/or interlocking plug connections.

10. The fiber molding machine (100) according to any of the claims 1 to 9,
**characterized in that**
the suction tool (2) comprises a base plate (26) having suction heads (21) mounted thereon and a gas line system (27) in the base plate (26), which distributes at least the negative pressure provided via the first interface (4s) to the suction heads (21) as suction pressure (SD) for suctioning the fiber material (11).

11. The fiber molding machine (100) according to claim 10,
**characterized in that**
the base plate (26) forms a second interface (26s) with media connections (MA) compatible with the individual suction heads (21) and compatible mechanical fastening devices (BE), such that individual or all suction heads (21) can be reversibly connected to the base plate (26).

12. The fiber molding machine (100) according to any of the claims 1 to 11,
**characterized in that**
the third interface (3s) on the side of the pre-pressing unit (3) comprises a carrier plate (32) on which the lower pre-pressing tools (31) are arranged.

13. The fiber molding machine (100) according to claim 12,
**characterized in that**
the carrier plate (32) comprises a transport interface (32s) for automatic changing of the pre-pressing unit (3) via a motion unit (4), preferably the motion unit (4) of the molding station (20).

14. The fiber molding machine (100) according to any of the claims 8 to 13,
**characterized in that**
the holding devices (40h) comprise at least two defined tool zero points (40n) on their sides facing the respective upper and lower hot-pressing units (40o, 40u) for a precise positioning of the upper hot-pressing unit (40o) and/or lower hot-pressing unit (40u) on the respective holding devices (40h).

15. The fiber molding machine (100) according to claim 14,
**characterized in that**
the tool zero points (40n) are self-centering and comprise temperature compensation.

16. The fiber molding machine (100) according to any of the claims 8 to 15,
**characterized in that**
the holding device (40h) of the hot-pressing station (40) for the upper hot pressing unit (40o) comprises a slip guard (40v) to prevent the upper hot-pressing unit (40o) from detaching from the holding plate (40h).

17. The fiber molding machine (100) according to any of the claims 8 to 16,
**characterized in that**
the holding device (40h) comprises an additional transport interface (40t) for automatically changing the upper hot-pressing unit (40o) and/or the lower hot-pressing unit (40u) via a motion unit (4), preferably the motion unit (4) of the molding station (20), preferably the transport interface (40t) comprises compressed gas and vacuum connections.

18. The fiber molding machine (100) according to any of the claims 1 to 17,
**characterized in that**
the fourth interface (40s) on the side of the upper hot-pressing unit (40o) and the lower hot-pressing unit (40u) each comprises a carrier plate (45) on which the
lower hot-pressing tools (41) or upper hot-pressing tools (42) are arranged.

19. The fiber molding machine (100) according to claim 18,
**characterized in that**
the respective carrier plates (45) comprise a thermal insulation layer (44) in order to thermally insulate the respective carrier plates (45) from the holding device (40h), and/or in that a or a plurality of expansion means (47) are arranged in the carrier plate (45) between the thermal insulation layer (44) and a side of the carrier plate (45) facing the holding device (40h) in order to improve the positional fidelity of the carrier plate (45) to the holding device (40h).

20. The fiber molding machine (100) according to any of the claims 1 to 19,
**characterized in that**
the upper hot-pressing unit (40o) and the lower hot-pressing unit (40u) are each mounted in the hot-pressing station (40) such that they can be moved laterally in order to enable a tool change of the respective lower hot-pressing unit (40u) and upper hot-pressing unit (40o) outside a process chamber of the hot-pressing station (40).

21. A method (200) for automatically changing tools in a fiber molding machine (100) according to any of the claims 1 to 20, comprising the following steps:
- Provision (210) of a tool (2, 3, 40o, 40u) to be exchanged in the tool changing station (60) in a first changing position (61);
- Depositing (220) of the exchanged tool (2, 3, 40o, 40u) in the tool changing station (60) in a second changing position (61);
- Removal (230) of the tool (2, 3, 40o, 40u) to be exchanged from the first changing position (61) and insertion of this tool (2, 3, 40o, 40u), depending on the tool (2, 3, 40o, 40u), into the molding station (20), into the pre-molding station (30) or into the hot-pressing station (40); and
- Removal (240) of the exchanged tool (2, 3, 40o, 40u) from the second changing position (61) from the tool changing station (60).

## Revendications

1. Installation de moulage de fibres (100) comprenant au moins
un poste de formage (20) pour le formage d'une pièce moulée (10) en matériau fibreux (11) dégradable de manière écologique dans un processus de formage de fibres comprenant
- un outil d'aspiration (2) comprenant plusieurs têtes d'aspiration (21) avec chacune un côté d'aspiration de tête d'aspiration (21s) formé en trois dimensions pour aspirer le matériau fibreux dégradable de manière écologique (11) au moyen d'une dépression comme pression d'aspiration (SD) à partir d'un réservoir (6) avec une pulpe (1) comme solution liquide comprenant le matériau fibreux dégradable de manière écologique (11) pour former la pièce moulée (10) ; et
- une unité de déplacement (4) pour immerger au moins partiellement l'outil d'aspiration (2) dans la pâte (1), sur laquelle l'outil d'aspiration (2) est monté de manière réversible par l'intermédiaire d'une première interface (4s) de manière appropriée pour un changement automatique de l'outil d'aspiration (2),
un poste de préformage (30) pour le préformage d'une pièce moulée (10) en matériau fibreux (11) dégradable de manière écologique dans un processus de moulage de fibres, comprenant une unité de préformage (3) pour exercer une pression de préformage (VD) sur la pièce moulée (10) formée au moyen du poste de formage (20) pour réduire une proportion de la solution liquide dans la pièce moulée (10) et pour stabiliser la forme de la pièce moulée (10), l'unité de pré-pressage (3) étant réalisée sous forme de multi-outil avec une pluralité de sous-outils de pré-pressage (31) adaptés à l'outil d'aspiration (2), l'unité de pré-pressage (3) étant montée de manière réversible avec le poste de pré-moulage (30) par l'intermédiaire d'une troisième interface (3s) appropriée pour un changement automatique de l'unité de pré-pressage (3), et
un poste de pressage à chaud (40) pour le formage final d'une pièce moulée (10) en matériau fibreux (11) dégradable de manière écologique dans un processus de moulage de fibres, comprenant une sous-unité de pressage à chaud (40u) sous forme de multi-outil avec une pluralité de sous-outils de pressage à chaud (41) adaptés chacun au contour de la pièce moulée (10) pour son réception par les sous-outils de pressage à chaud respectifs (41) et une unité supérieure de pressage à chaud (40o) sous forme d'un outil multiple avec une pluralité d'outils supérieurs de pressage à chaud (42) adaptés en conséquence à la pièce moulée (10) pour être placés sur ou dans la pièce moulée (10) le long d'une direction de fermeture (SR) pour le poste de pressage à chaud (40), dans laquelle la sous-unité de pressage à chaud (40u) et/ou l'unité supérieure de pressage à chaud (40o) sont prévues pour exercer une pression de pressage à chaud (HD) sur les pièces moulées (10) disposées entre les outils inférieurs de pressage à chaud (41) et les outils supérieurs de pressage à chaud (42) respectifs lors du pressage à chaud, dans laquelle l'unité supérieure de pressage à chaud (40o) et l'unité inférieure de pressage à chaud (40u) sont montées de manière réversible sur la station de pressage à chaud (40) via des quatrièmes interfaces respectives (40s) adaptées à un changement automatique de l'unité supérieure de pressage à chaud (40o) et/ou de l'unité inférieure de pressage à chaud (40u), l'installation de moulage de fibres (100) étant conçue pour permettre un changement automatique d'outils (2, 3, 40o, 40u) à partir du poste de moulage (20), du poste de préformage (30) et/ou du poste de pressage à chaud (40),
**caractérisée en ce que**
que l'installation de moulage de fibres (100) comprend au moins un poste de changement d'outil (60) dans lequel au moins un outil (2, 3, 40o, 40u) du groupe d'outils comprenant l'outil d'aspiration (2), l'unité de pré-pressage (3), l'unité supérieure de pressage à chaud (40o) et/ou l'unité inférieure de pressage à chaud (40u) peut être positionné pour un changement d'outil automatique contre l'autre outil respectif (2, 3, 40o, 40u) dans l'installation de moulage de fibres (100).

2. Installation de moulage de fibres (100) selon la revendication 1,
**caractérisée en ce que,**
**en ce que** le poste de changement d'outil (60) comprend une pluralité de positions de changement d'outil (61) qui sont adaptées à la forme de l'outil respectif (2, 3, 40o, 40u).

3. Installation de moulage de fibres (100) selon la revendication 2,
**caractérisée en ce que,**
que le poste de changement d'outil (60) comprend une bande transporteuse (80) pour les outils à changer (2, 3, 40o, 40u), qui est conçue pour transporter les outils à changer (2, 3, 40o, 40u) aux positions de changement d'outil respectives (61) ou pour évacuer à nouveau l'outil changé (2, 3, 40o, 40u) des positions de changement d'outil (61).

4. Installation de moulage de fibres (100) selon la revendication 3,
**caractérisée en ce que,**
**en ce que** le poste de changement d'outil (60) comprend une unité de déplacement (62), de préférence un
robot avec bras de préhension, pour placer les outils (2, 3, 40o, 40u) fournis avec la bande transporteuse (80) dans les positions de changement d'outil (61) souhaitées.

5. Installation de moulage de fibres (100) selon la revendication 4,
**caractérisée en ce que,**
**en ce que** le poste de changement d'outil (60) comprend une unité de déplacement (62) réalisée sous forme de robot pour les outils (2, 3, 40o, 40u) à changer, qui est conçue pour transporter les outils (2, 3, 40o, 40u) à changer vers les positions de changement d'outil (61) respectives ou pour évacuer à nouveau l'outil (2, 3, 40o, 40u) changé des positions de changement d'outil (61).

6. Installation de moulage de fibres (100) selon l'une quelconque des revendications 1 à 5,
**caractérisée en ce que,**
**en ce que** l'unité de déplacement (4) du poste de formage (20), le poste de préformage (30), le poste de pressage à chaud (40) et le poste de changement d'outil (60) sont positionnés les uns par rapport aux autres de telle sorte que l'unité de déplacement (4) du poste de formage (20), en fonction d'unité de changement (70), peut enlever les outils (2, 3, 40o, 40u) de ces postes (20, 30, 40) peut déposer et retirer automatiquement dans le poste de changement d'outil (60), au moins des interfaces de transport respectives (32s, 40t) du poste de préformage (20) et/ou du poste de pressage à chaud (40) étant configurées de telle sorte qu'elles sont réalisées de manière compatible avec la première interface (4s) de l'unité de déplacement (4) en tant qu'unité de changement (70).

7. Installation de moulage de fibres (100) selon l'une quelconque des revendications 1 à 6,
**caractérisée en ce que,**
que l'installation de moulage de fibres (100) comprend une unité de commande (50) pour commander au moins le poste de formage (20), le poste de préformage (30), le poste de pressage à chaud (40), le poste de changement (60) ainsi que d'autres composants (70).

8. Installation de moulage de fibres (100) selon l'une quelconque des revendications 1 à 7,
**caractérisée en ce que,**
**en ce que** la première interface (4s) est formée par des raccords de fluide (MA) compatibles entre eux, de préférence des raccords de dépression et/ou de surpression, et des dispositifs de fixation mécaniques (BE) compatibles entre eux sur les côtés de l'unité de déplacement (4) et de l'outil d'aspiration (2), et/ou
**en ce que** la troisième interface (3s) est formée par des dispositifs de fixation mécaniques (BE) compatibles entre eux du côté de l'unité de pré-pressage (3) et du côté du poste de préformage (30), de préférence en outre par des raccords de fluide (MA) compatibles entre eux, de manière particulièrement préférée les raccords de fluide (MA) comprennent des raccords de chauffage et/ou de gaz comprimé, et/ou
que la quatrième interface (40s) est formée par un dispositif de fixation mécanique (BE) compatible entre eux et des raccords de fluide (MA) compatibles entre eux du côté de l'unité supérieure de pressage à chaud (40o) et/ou de l'unité inférieure de pressage à chaud (40u) et du côté d'un dispositif de maintien (40h) correspondant, réalisé de préférence sous forme de plaque de maintien, du poste de pressage à chaud (40), de manière particulièrement préférée les raccords de fluide (MA) comprennent, outre des raccords de chauffage, également des raccords de gaz comprimé et de vide.

9. Installation de moulage de fibres (100) selon la revendication 8,
**caractérisée en ce que,**
**en ce que** les raccords de fluide (MA) compatibles entre eux et/ou les dispositifs de fixation mécaniques (BE) compatibles sont des dispositifs de fermeture rapide réversibles, de préférence une fermeture à baïonnette et/ou des raccords enfichables s'enclenchant les uns dans les autres, et/ou
**en ce que** les dispositifs de fixation mécaniques compatibles (BE), de préférence également les raccords de fluide compatibles entre eux (MA), sont un système de serrage rapide réversible, de préférence une fermeture à baïonnette et/ou des raccords enfichables s'enclenchant les uns dans les autres, et/ou
**en ce que** les dispositifs de fixation mécaniques (BE) compatibles entre eux et les raccords de fluide (MA) compatibles entre eux sont un système de serrage rapide réversible, de préférence une fermeture à baïonnette et/ou des raccords enfichables s'enclenchant les uns dans les autres.

10. Installation de moulage de fibres (100) selon l'une quelconque des revendications 1 à 9,
**caractérisée en ce que,**
**en ce que** l'outil d'aspiration (2) comprend une plaque de base (26) avec des têtes d'aspiration (21) montées sur celle-ci et un système de conduite de gaz (27) dans la plaque de base (26) qui distribue au moins la dépression fournie via la première interface (4s) aux têtes d'aspiration (21) comme la pression d'aspiration (SD) pour aspirer le matériau fibreux (11).

11. Installation de moulage de fibres (100) selon la revendication 10,
**caractérisée en ce que,**
**en ce que** la plaque de base (26) forme une deuxième interface (26s) avec des raccords de fluide (MA) compatibles avec les différentes têtes d'aspiration (21) et des dispositifs de fixation mécaniques (BE) compatibles, afin que certaines ou toutes les têtes d'aspiration (21) puissent être reliées de manière réversible à la plaque de base (26).

12. Installation de moulage de fibres (100) selon l'une quelconque des revendications 1 à 11,
**caractérisée en ce que,**
**en ce que** la troisième interface (3s) comprend, du côté de l'unité de pré-pressage (3), une plaque de support (32) sur laquelle sont disposés les sous-outils de pré-pressage (31).

13. Installation de moulage de fibres (100) selon la revendication 12,
**caractérisée en ce que,**
**en ce que** la plaque de support (32) comprend une interface de transport (32s) pour le changement automatique de l'unité de pré-pressage (3) par une unité de déplacement (4), de préférence l'unité de déplacement (4) du poste de formage (20).

14. Installation de moulage de fibres (100) selon l'une quelconque des revendications 8 à 13,
**caractérisée en ce que,**
**en ce que** les dispositifs de maintien (40h) comprennent, sur leurs côtés tournés vers les unités supérieure et inférieure de pressage à chaud (40o, 40u) respectives, au moins deux points zéro d'outil (40n) définis pour une mise en place en position exacte de l'unité supérieure de pressage à chaud (40o) et/ou de l'unité inférieure de pressage à chaud (40u) sur les dispositifs de maintien (40h) respectifs.

15. Installation de moulage de fibres (100) selon la revendication 14,
**caractérisée en ce que,**
que les points zéro de l'outil (40n) sont réalisés de manière autocentrée et comprennent une compensation de température.

16. Installation de moulage de fibres (100) selon l'une quelconque des revendications 8 à 15,
**caractérisée en ce que,**
**en ce que** le dispositif de maintien (40h) du poste de pressage à chaud (40) pour l'unité supérieure de pressage à chaud (40o) comprend une protection contre la chute (40v) pour empêcher l'unité supérieure de pressage à chaud (40o) de se détacher de la plaque de maintien (40h).

17. Installation de moulage de fibres (100) selon l'une quelconque des revendications 8 à 16,
**caractérisée en ce que,**
**en ce que** le dispositif de maintien (40h) comprend une interface de transport supplémentaire (40t) pour le changement automatique de l'unité supérieure de pressage à chaud (40o) et/ou de l'unité inférieure de pressage à chaud (40u) par une unité de déplacement (4), de préférence l'unité de déplacement (4) du poste de formage (20), de préférence l'interface de transport (40t) comprend des raccords de gaz comprimé et de vide.

18. Installation de moulage de fibres (100) selon l'une quelconque des revendications 1 à 17,
**caractérisée en ce que,**
**en ce que** la quatrième interface (40s) comprend, sur les côtés de l'unité supérieure de pressage à chaud (40o) et de l'unité inférieure de pressage à chaud (40u), respectivement une plaque de support (45) sur laquelle sont montés les éléments d'impression (41) ou des outils supérieurs de pressage à chaud (42) sont disposés.

19. Installation de moulage de fibres (100) selon la revendication 18,
**caractérisée en ce que,**
**en ce que** les plaques de support respectives (45) comprennent une couche d'isolation thermique (44), afin d'isoler thermiquement les plaques de support respectives (45) contre le dispositif de maintien (40h), et/ou
**en ce qu'**un ou plusieurs moyens de dilatation (47) sont disposés dans la plaque de support (45) entre la couche d'isolation thermique (44) et un côté de la plaque de support (45) tourné vers le dispositif de maintien (40h), afin d'améliorer une fidélité de position de la plaque de support (45) par rapport au dispositif de maintien (40h).

20. Installation de moulage de fibres (100) selon l'une quelconque des revendications 1 à 19,
**caractérisée en ce que,**
**en ce que** l'unité supérieure de pressage à chaud (40o) et l'unité inférieure de pressage à chaud (40u) sont montées chacune de manière déplaçable latéralement dans le poste de pressage à chaud (40), afin de permettre un changement d'outil de l'unité inférieure de pressage à chaud (40u) et de l'unité supérieure de pressage à chaud (40o) respectives en dehors d'un espace de processus du poste de pressage à chaud (40).

21. Procédé (200) de changement automatique d'outillage dans une installation de moulage de fibres (100) selon l'une quelconque des revendications 1 à 20, comprenant les étapes suivantes :
- mise à disposition (210) d'un outil (2, 3, 40o, 40u) à changer dans le poste de changement d'outil (60) dans une première position de changement (61) ;
- dépose (220) de l'outil remplacé (2, 3, 40o, 40u) dans le poste de changement d'outil (60) dans une deuxième position de changement (61) ;
- extraction (230) de l'outil (2, 3, 40o, 40u) à remplacer de la première position de remplacement (61) et l'insertion de cet outil (2, 3, 40o, 40u), selon l'outil (2, 3, 40o, 40u), dans le poste de formage (20), dans le poste de préformage (30) ou dans le poste de pressage à chaud (40) ; et
- évacuation (240) de l'outil remplacé (2, 3, 40o, 40u) de la deuxième position de changement (61) hors du poste de changement d'outil (60).
